# EUROPEAN PATENT SPECIFICATION

(11) **EP 3 689 762 B1**
(45) Date of publication and mention of the grant of the patent: **02.04.2025**
(21) Application number: 18861270.9
(22) Date of filing: 06.09.2018
(51) Int. Cl.: G06Q 10/08, B65B 61/02, B65B 5/08, B65B 57/00, B65B 57/10, B65D 65/40

(54) **PRODUCT MANAGEMENT SYSTEM, PRODUCT PROCESSING DEVICE, AND FILM FOR BAG-MAKING/PACKAGING**
PRODUKTVERWALTUNGSSYSTEM, PRODUKTVERARBEITUNGSVORRICHTUNG UND FILM FÜR BEUTELHERSTELLUNG/VERPACKUNGEN
SYSTÈME DE GESTION DE PRODUITS, DISPOSITIF DE TRAITEMENT DE PRODUITS ET FILM POUR LA FABRICATION DE SACS/EMBALLAGE

(30) Priority: 29.09.2017 JP 2017191457; 29.09.2017 JP 2017191458; 29.09.2017 JP 2017191459
(43) Date of publication of application: 05.08.2020
(73) Proprietor: Ishida Co., Ltd., Kyoto 606-8392 (JP)
(72) Inventor: TSUGAWA, Tono, Kyoto-shi Kyoto 606-8392 (JP); MORIHIRA, Toru, Ritto-shi Shiga 520-3026 (JP); OTA, Koichi, Kyoto-shi Kyoto 606-8392 (JP)
(74) Representative: Gill Jennings & Every LLP
(86) International application number: PCT/JP2018/032981
(87) International publication number: WO 2019/065137

(56) References cited:
- WO-A1-2011/102098
- AU-A1- 2015 377 541
- CN-A- 105 800 007
- JP-A- 2002 104 338
- JP-A- 2003 170 918
- JP-A- 2004 262 489
- JP-A- 2006 105 716
- JP-A- 2006 290 374
- JP-A- 2009 183 818
- JP-A- 2014 080 214
- JP-A- 2015 040 073
- JP-U- 3 180 313
- US-A1- 2002 039 183

## Description

### TECHNICAL FIELD

The present invention relates to a product management system, a product processing device, and a bag-making and packaging film.

### BACKGROUND ART

A product management system manages products during the manufacture of the products, for example. The management content includes processes such as weighing, packaging, inspecting for foreign objects, and discharging nonconforming products. The processes are executed by product processing devices. For example, the packaging process is executed by a bag-making and packaging machine, which is one form of a product processing device, disclosed in Patent Document 1 (JP-A 2003-191901). In the inspection process for foreign objects, an inspection device, which is one form of a product processing device, is used and nonconforming products mixed with foreign objects are identified. The nonconforming products that have been found are discharged from the manufacturing line by a sorting device, which is one aspect of a product processing device, and is disposed just after the inspection device.

Moreover, Patent Document 2 (JP-A 2016-132454) discloses a packaging film that is set in a bag-making and packaging machine. The packaging film has a pattern iteratively printed on it. One pattern corresponds to one bag. The pattern often includes a product code for identifying the type of product that is packed in the bag. Patent Document 1 mentioned above refers to serial numbers being printed on the packaging material in the bag-making and packaging machine.

US 2002/039183 A1 discloses an integrated soft bag inspection system that overcomes the difficulty of inspection associated with the unstable shape peculiar to soft bags (for example soft bags for intravenous feed use) and makes it possible to carry out inspection of soft bags automatically and with high precision. The system uses a robot having at least a robot hand and has image pickup means for picking up an image of a soft bag and grip position detecting means for detecting a position on a neck part of the soft bag to be gripped by the robot hand on the basis of image information from the image pickup means. A carrying system may be made using a plurality of such robots and carrying control means provided for controlling the robots so that the robot hand of each robot grips the neck part of the soft bag and carries the soft bag to a predetermined inspection position and soft bags arriving from a production line are continuously transferred between adjacent robots and various inspections are carried out on the soft bags successively.

AU 2015/377541 A1 discloses a bag manufacturing and packaging machine in the provided with a feed mechanism, a roll retaining unit, a printing mechanism, a former, a longitudinal seal mechanism, a transverse seal mechanism, a cutting mechanism, a first sensor and a second sensor. The printing mechanism prints information on a film. The former overlaps two longitudinal sides of the film. The longitudinal seal mechanism creates a film tube by bonding the two longitudinal sides. The transverse seal mechanism pinches and affixes the film tube, creating a transverse seal section. The cutting mechanism cuts the film tube at the transverse seal section. The first sensor detects a mark on the film to specify a cutting position at which the film tube is to be cut. The second sensor detects a mark on the film to specify a printing position at which predetermined information is to be printed.

### SUMMARY OF INVENTION

### <Technical Problem>

If the products are delayed in reaching the sorting device due to, for example, the products touching something on the way in the conveyance path, there is the concern that the sorting device will fail to discharge nonconforming products.

It is a first object of the invention to reduce the risk that nonconforming products could be mixed in with conforming products in a product management system.

Furthermore, it is difficult to identify individual products using serial numbers. The workers bare the burden of the work of determining where on the products the serial numbers are printed and reading the serial numbers visually or with a reading device.

It is a second object of the invention to improve the efficiency of individual identification.

Moreover, the pattern on the packaging film can be utilized for various purposes if it includes not only product codes but also individual identification information that enables individual identification of the products.

It is a third object of the invention to provide a packaging film that can be utilized for various purposes.

### <Solution to Problem>

### [1. Product Management System]

A product management system pertaining to a first aspect of the invention manages products that are a food and have print surfaces. The product management system has an inspection unit, a first information acquisition unit, and a storage unit.

The inspection unit performs an inspection of the products and outputs inspection results as to whether the products are conforming products or nonconforming products. Plural pieces of individual identification information that are the same are printed on the print surfaces of the products. The first information acquisition unit reads the individual identification information from the products. The storage unit associates and stores, with the inspection results, the individual identification information that the first information acquisition unit has read.

According to this configuration, the inspection results are associated with the individual identification information that has been printed on each product. Consequently, by reading the individual identification information, whether the products are conforming products or nonconforming products can be grasped.

A product management system pertaining to a second aspect of the invention is the product management system pertaining to the first aspect, wherein the print surfaces are outer surfaces of the products, packaging of the products, or labels of the products.

According to this configuration, the individual identification information is printed on outer surfaces, packaging, or labels of the products. Consequently, the individual identification information corresponds to the products.

A product management system pertaining to a third aspect of the invention is the product management system pertaining to the first aspect or the second aspect, wherein the print surfaces have at least a first surface and a second surface on the opposite side of the first surface. Plural pieces of the same individual identification information are printed on each of the first surface and the second surface.

According to this configuration, plural pieces of the same individual identification information are printed on each of the first surface and the second surface. Consequently, individual identification is possible when the first information acquisition unit reads any of the first surface and the second surface.

A product management system pertaining to a fourth aspect of the invention is the product management system pertaining to any one of the first aspect to the third aspect, wherein plural pieces of the same individual identification information are printed on 20% or more of the area of the print surfaces.

According to this configuration, 20% or more of the area of the print surfaces is the individual identification information. Consequently, it is easy for the first information acquisition unit to read the individual identification information.

A product management system pertaining to a fifth aspect of the invention is the product management system pertaining to the fourth aspect, wherein plural pieces of the same individual identification information are printed on 50% or more of the area of the print surfaces.

According to this configuration, 50% or more of the area of the print surfaces is the individual identification information. Consequently, it is even easier for the first information acquisition unit to read the individual identification information.

A product management system pertaining to a sixth aspect of the invention is the product management system pertaining to any one of the first aspect to the fifth aspect, further having a sorting unit. The sorting unit discharges the products that are the nonconforming products on the basis of the inspection results associated with the individual identification information that the first information acquisition unit has read.

According to this configuration, the sorting unit discharges the nonconforming products on the basis of the inspection results associated with the individual identification information. Consequently, the risk that nonconforming products could be handled as conforming products can be reduced.

A product management system pertaining to a seventh aspect of the invention is the product management system pertaining to any one of the first aspect to the sixth aspect, further having a nonconforming product retention unit, a second information acquisition unit, and a nonconforming product verification unit. The nonconforming product retention unit retains the nonconforming products. The second information acquisition unit reads the individual identification information from the products that are conveyed to the nonconforming product retention unit. The nonconforming product verification unit queries the storage unit for the inspection results associated with the individual identification information that the second information acquisition unit has read and verifies that the products that are conveyed to the nonconforming product retention unit are the nonconforming products.

According to this configuration, it is verified that the nonconforming products have been conveyed to the nonconforming product retention unit. Consequently, whether or not all the nonconforming products that have been found by the inspection unit have been put into the nonconforming product retention unit can be verified, so the risk that nonconforming products could be handled as conforming products can be reduced even more.

A product management system pertaining to an eighth aspect of the invention is the product management system pertaining to any one of the first aspect to the seventh aspect, further having a box packing unit, a third information acquisition unit, and a conforming product verification unit. The box packing unit packs the conforming products into packing boxes. The third information acquisition unit reads the individual identification information from the products that are conveyed to the box packing unit. The conforming product verification unit queries the storage unit for the inspection results associated with the individual identification information that the third information acquisition unit has read and verifies that the products that are conveyed to the box packing unit are the conforming products.

According to this configuration, it is verified that the conforming products have been conveyed to the box packing unit. Consequently, nonconforming products can be inhibited from reaching the box packing unit and being shipped.

### [2. Product Processing Device]

A product processing device pertaining to a ninth aspect of the invention has a printing unit that prints information on print surfaces of products and a processing unit that processes the products. The print surfaces are outer surfaces of the products, packaging of the products, or labels of the products. The printing unit prints, on the print surfaces, plural pieces of individual identification information that are the same.

According to this configuration, plural pieces of the same individual identification information are printed on the print surfaces. Consequently, the probability that a reading device would recognize the individual identification information increases, so the efficiency of individual identification is improved.

A product processing device pertaining to a tenth aspect of the invention is the product processing device pertaining to the ninth aspect, wherein the print surfaces have at least a first surface and a second surface on the opposite side of the first surface. The printing unit prints plural pieces of the same individual identification information on each of the first surface and the second surface.

According to this configuration, plural pieces of the same individual identification information are printed on each of the first surface and the second surface. Consequently, individual identification is possible when a reading device reads any of the first surface and the second surface.

A product processing device pertaining to an eleventh aspect of the invention is the product processing device pertaining to the ninth aspect or the tenth aspect, wherein there is substantially no space between adjacent pieces of the plural individual identification information on the print surfaces.

According to this configuration, there is no space between adjacent pieces of the individual identification information. Consequently, the probability that a reading device would recognize the individual identification information increases even more, so the efficiency of individual identification is improved.

A product processing device pertaining to a twelfth aspect of the invention is the product processing device pertaining to any one of the ninth aspect to the eleventh aspect, wherein the printing unit prints plural pieces of the same individual identification information on 20% or more of the area of the print surfaces.

According to this configuration, the individual identification information is printed on 20% or more of the area of the print surfaces. Consequently, it is easy for a reading device to read the individual identification information.

A product processing device pertaining to a thirteenth aspect of the invention is the product processing device pertaining to the twelfth aspect, wherein the printing unit prints plural pieces of the same individual identification information on 50% or more of the area of the print surfaces.

According to this configuration, the individual identification information is printed on 50% or more of the area of the print surfaces. Consequently, it is even easier for a reading device to read the individual identification information.

A product processing device pertaining to a fourteenth aspect of the invention is the product processing device pertaining to any one of the ninth aspect to the thirteenth aspect, wherein the printing unit prints plural pieces of the same individual identification information in the form of digital watermarks.

According to this configuration, the individual identification information is printed in the form of digital watermarks. Consequently, there is little concern of inconveniencing consumers and others who do not need the individual identification information.

A product processing device pertaining to a fifteenth aspect of the invention is the product processing device pertaining to any one of the ninth aspect to the fourteenth aspect, wherein the packaging is boxes or packaging film.

According to this configuration, the packaging is boxes or bags. Consequently, the efficiency of individual identification is improved in regard to products packaged by boxes or bags, for example.

A product processing device pertaining to a sixteenth aspect of the invention is the product processing device pertaining to any one of the ninth aspect to the fifteenth aspect, wherein the products are a food.

According to this configuration, the products are a food. Consequently, the efficiency of individual identification is improved in regard to food.

A product processing device pertaining to a seventeenth aspect of the invention is the product processing device pertaining to any one of the ninth aspect to the sixteenth aspect, further having an information acquisition unit that reads at least one of the plural pieces of the same individual identification information.

According to this configuration, the product processing device further has the information acquisition unit. Consequently, processing details can be verified on the basis of the individual identification information that the information acquisition unit has read.

A product processing device pertaining to an eighteenth aspect of the invention is the product processing device pertaining to any one of the ninth aspect to the seventeenth aspect, wherein the processing unit includes at least one of a packaging unit that packages the products and an inspection unit that inspects whether the products are conforming products.

According to this configuration, the processing unit includes any of a packaging unit and an inspection unit. Consequently, individual identification can be executed in the process of packaging or inspecting the products.

### [3. Bag-making and Packaging Film]

A packaging film pertaining to a nineteenth aspect of the invention is set in a bag-making and packaging machine. A pattern is iteratively printed on the packaging film. The pattern corresponds to one bag. The pattern includes unique individual identification information.

According to this configuration, each bag has unique individual identification information that is distinct from that of other bags. Consequently, the individual identification information can be utilized for various purposes, such as identifying the manufacturing line, identifying the manufacturing lot, comparing manufacturing conditions and product quality, identifying and disposing of nonconforming products in the manufacturing process, and tracking shipments and circulation.

A packaging film pertaining to a twentieth aspect of the invention is the packaging film pertaining to the nineteenth aspect, wherein the pattern includes plural pieces of the same individual identification information.

According to this configuration, plural pieces of the same individual identification information are printed on one bag. Consequently, the probability that a reading device will recognize the individual identification information increases, so the efficiency of individual identification of the products is improved.

A packaging film pertaining to a twenty-first aspect of the invention is the packaging film pertaining to the twentieth aspect, wherein the bag includes a first surface and a second surface on the opposite side of the first surface. The pattern has a first area corresponding to the first surface and a second area corresponding to the second surface. The first area and the second area each include plural pieces of the same individual identification information.

According to this configuration, plural pieces of the same individual identification information are printed on each of the first surface and the second surface. Consequently, individual identification is possible when a reading device reads any of the first surface and the second surface.

A packaging film pertaining to a twenty-second aspect of the invention is the packaging film pertaining to any one of the nineteenth aspect to the twenty-first aspect, wherein the unique individual identification information included in the plural patterns that have been printed on the packaging film is consecutive numbers.

According to this configuration, the individual identification information is consecutive numbers. Consequently, it is easy to manage products at the manufacturing site, for example.

A packaging film pertaining to a twenty-third aspect of the invention is the packaging film pertaining to any one of the nineteenth aspect to the twenty-second aspect, wherein the percentage of the area of the pattern occupied by the individual identification information is 20% or more.

According to this configuration, 20% or more of the area of the pattern is the individual identification information. Consequently, it is easy for a reading device to read the individual identification information.

A packaging film pertaining to a twenty-fourth aspect of the invention is the packaging film pertaining to the twenty-third aspect, wherein the percentage of the area of the pattern occupied by the individual identification information is 50% or more.

According to this configuration, 50% or more of the area of the pattern is the individual identification information. Consequently, it is even easier for a reading device to read the individual identification information.

A packaging film pertaining to a twenty-fifth aspect of the invention is the packaging film pertaining to any one of the nineteenth aspect to the twenty-fourth aspect, wherein the individual identification information is printed in the form of digital watermarks.

According to this configuration, the individual identification information is printed in the form of digital watermarks. Consequently, there is little concern of inconveniencing consumers and others who do not need the individual identification information.

### <Advantageous Effects of Invention>

According to the product management system pertaining to the invention, the risk that nonconforming products could be mixed in with conforming products can be reduced. According to the product processing device pertaining to the invention, the efficiency of individual identification is improved. The packaging film pertaining to the invention can utilize individual identification information for various purposes.

### BRIEF DESCRIPTION OF DRAWINGS

FIG. 1 is a view showing a first surface S1 of a product P packaged in a film F.
FIG. 2 is a view showing a second surface S2 of the product P packaged in the film F.
FIG. 3 is a general view showing an iterative pattern PT on the film F.
FIG. 4 is a schematic view of a product management system 90 pertaining to a first embodiment of the invention.
FIG. 5 is a view showing the configuration of a bag-making and packaging machine 20 in which the film F is set.
FIG. 6 is a view showing a film tube FT.
FIG. 7 is a view showing the film tube FT.
FIG. 8 is a block diagram showing part of the product management system 90.
FIG. 9A is a view showing a camera 201.
FIG. 9B is a view showing a barcode reader 202.
FIG. 9C is a view showing a wearable terminal 203.
FIG. 9D is a view showing a keyboard 204.
FIG. 10 is a general view showing a periodic pattern PT on a film F' used in the product management system 90 pertaining to an example modification of the first embodiment of the invention.
FIG. 11 is a view showing a film tube FT'.
FIG. 12 is a view showing the film tube FT'.
FIG. 13 is a view showing a product P' that a product management system 90' pertaining to a second embodiment of the invention manages.
FIG. 14 is a schematic view of the product management system 90' pertaining to the second embodiment of the invention.
FIG. 15 is a view showing a product P" that a product management system 90" pertaining to a third embodiment of the invention manages.
FIG. 16 is a schematic view of the product management system 90" pertaining to the third embodiment of the invention.
FIG. 17 is a view showing a first surface S1 of a product P packaged in a film F".
FIG. 18 is a view showing a second surface S2 of the product P packaged in the film F".
FIG. 19 is a general view showing an iterative pattern PT on the film F" that is set in a product processing device 1020 pertaining to a first embodiment of the invention.
FIG. 20 is a view showing the configuration of the product processing device 1020 pertaining to the first embodiment of the invention.
FIG. 21 is a view showing the film F" on which individual identification information I has been printed.
FIG. 22 is a view showing a film F‴ on which the individual identification information has been printed by the product processing device 1020 pertaining to an example modification of the first embodiment of the invention.
FIG. 23 is a view showing the configuration of a product processing device 1090 pertaining to a second embodiment of the invention.
FIG. 24 is a view showing the configuration of a product processing device 1130 pertaining to a third embodiment of the invention.

### DESCRIPTION OF EMBODIMENTS

### [1. Product Management System]

Embodiments of a product management system pertaining to the invention will be described below using the drawings.

### <First Embodiment>

### (1) Product P

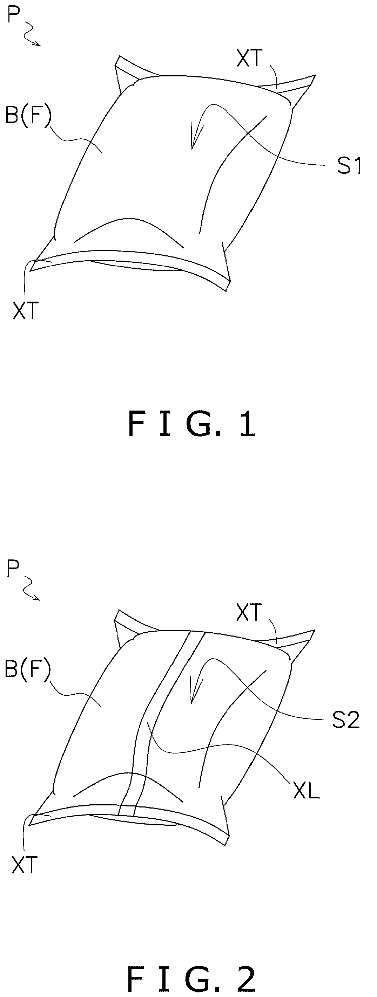

FIG. 1 and FIG. 2 are exterior views of a product P including a film F for packaging. The article packaged in the film F can be many different types of articles and is, for example, a food. What is called food here also includes medical products. The film F forms a bag B. FIG. 1 shows a first surface S1 of the bag B, and FIG. 2 shows a second surface S2 of the bag B. The second surface S2 is positioned on the opposite side of the first surface S1. The bag B has a longitudinal seal portion XL on the side of the second surface S2. The bag B has transverse seal portions XT on two edges that are opposite to each other.

Individual identification information I described later is printed on print surfaces of the product P. What is called print surfaces in the present embodiment means the packaging film F.

### (2) Film F

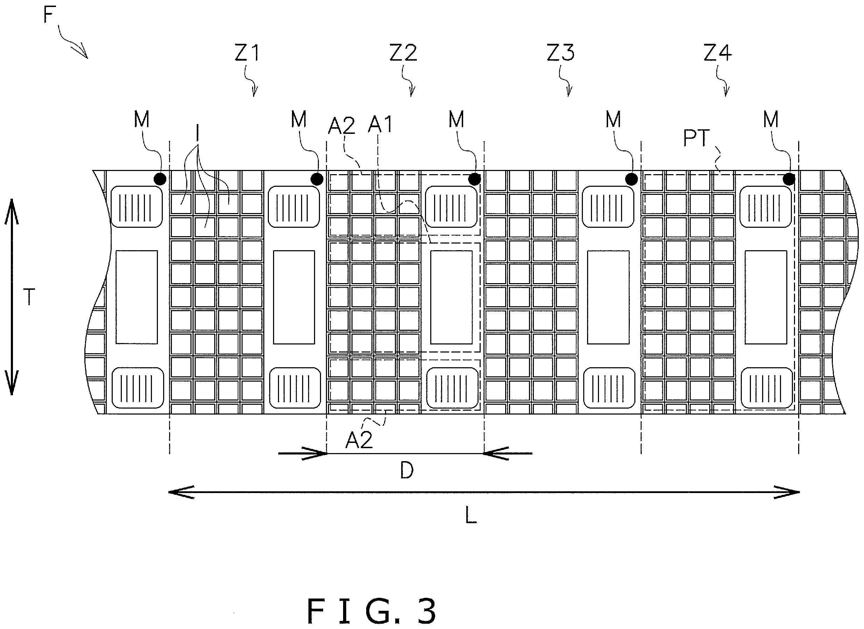

FIG. 3 shows the film F for packaging. The film F extends long in a longitudinal direction L and has a fixed width that spans in a transverse direction T perpendicular to the longitudinal direction L. A pattern PT corresponding to one bag B is iteratively printed every dimension D on the film F. That is, each zone Z1, zone Z2, zone Z3, and zone Z4 has the pattern PT and is used for forming one bag B. When the film F is finally processed into a bag B, dimension D becomes the distance between the upper edge and the lower edge of the bag B or the distance between the left edge and the right edge of the bag B depending on the design of the bag B.

Each zone has a first area A1 and a second area A2. The first area A1 is a portion that corresponds to the first surface S1 of the bag B. The second area A2 is a portion that corresponds to the second surface S2 of the bag B.

The pattern PT includes a reference mark M. The reference mark M is for being read by a photoelectric sensor 29 of a bag-making and packaging machine 20 described later. The reference mark M may be in any of the first area A1 and the second area A2.

The pattern PT includes unique individual identification information I. That is, each bag B has different individual identification information I. Plural pieces of the same individual identification information I are printed in the first area A1 of one bag B. Plural pieces of the same individual identification information I are printed in the second area A2 of one bag B. The plural pieces of individual identification information I printed in the first area A1 of one bag B and the plural pieces of individual identification information I printed in the second area A2 of the same bag B are the same.

The individual identification information I is printed in the form of optically readable codes, such as barcodes, two-dimensional barcodes, and dot codes. Adjacent pieces of the individual identification information I are disposed substantially with no space between them. The percentage of the area of the pattern PT occupied by the individual identification information I is 20% or more and preferably 50% or more.

The individual identification information I may be numbers. Moreover, the individual identification information I included in the iterative pattern PT may be consecutive numbers. For example, the individual identification information I included in zone Z1, zone Z2, zone Z3, and zone Z4 increases by one at a time in this order.

It is preferred that the pattern PT include, in addition to the individual identification information I printed in the form of codes, a written representation of the individual identification information I in numerals or characters.

### (3) Product Management System 90

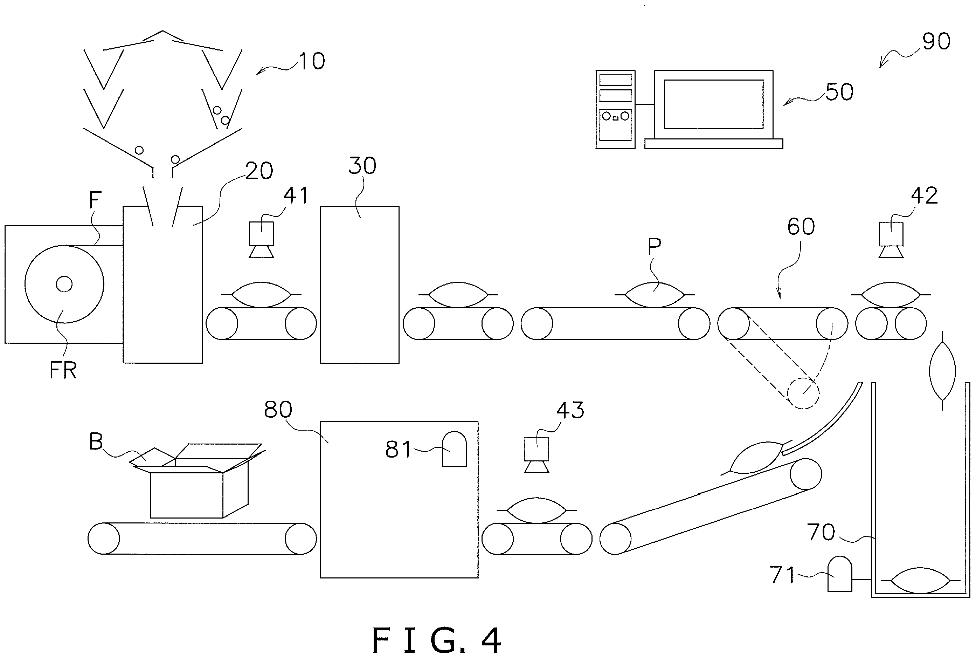

FIG. 4 shows a product management system 90. The product management system 90 is a system for managing the products P. The product management system 90 has a weighing machine 10, a bag-making and packaging machine 20, an inspection unit 30, a first information acquisition unit 41, a second information acquisition unit 42, a third information acquisition unit 43, a computer 50, a sorting unit 60, a nonconforming product retention unit 70, a box packing unit 80, and also conveyor belts to which reference signs are not assigned specifically.

### (3-1) Weighing Machine 10

The weighing machine 10 is for portioning out articles with a certain weight and delivering them to the bag-making and packaging machine 20. The weighing machine 10 is, for example, a combination weighing machine.

### (3-2) Bag-making and Packaging Machine 20

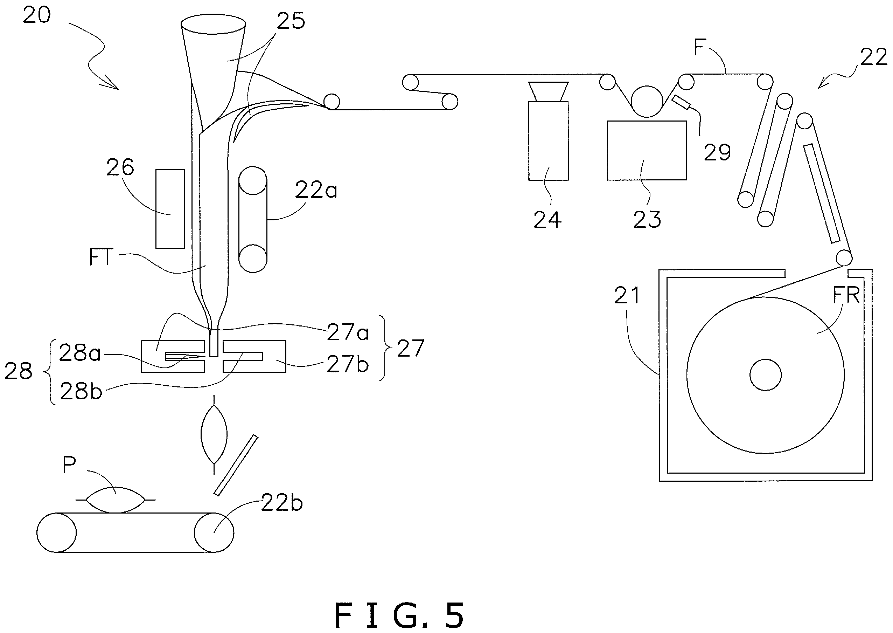

The bag-making and packaging machine 20 uses the film F to create the products P. The film F is set in the bag-making and packaging machine 20. FIG. 5 shows the configuration of the bag-making and packaging machine 20. The bag-making and packaging machine 20 has a roll holding unit 21, a conveyance mechanism 22, a printing unit 23, a printing inspection unit 24, a former 25, a longitudinal sealing mechanism 26, a transverse sealing mechanism 27, a cutting mechanism 28, and a photoelectric sensor 29.

The roll holding unit 21 holds a film roll FR. The film roll FR has a core and the film F wrapped around the core.

The conveyance mechanism 22 conveys the film F taken out from the roll holding unit 21. The conveyance mechanism 22 has plural rollers to which reference signs are not assigned, a pull-down belt 22a, and a discharge conveyor 22b.

The printing unit 23 prints, in the form of characters, predetermined information such as the date of manufacture in appropriate positions on the film F that is being conveyed. The printing inspection unit 24 includes a camera. The printing inspection unit 24 inspects whether or not the predetermined information that the printing unit 23 has printed has been printed on the film F in the correct way.

The former 25 forms into a tube the film F that has been conveyed thereto in a planar state and makes the two longitudinal edges of the film F overlap each other. The former 25 has a tubular member. The space inside the tubular member is used as a fill path for filling, with the article to be packaged, the bags B formed by the film F.

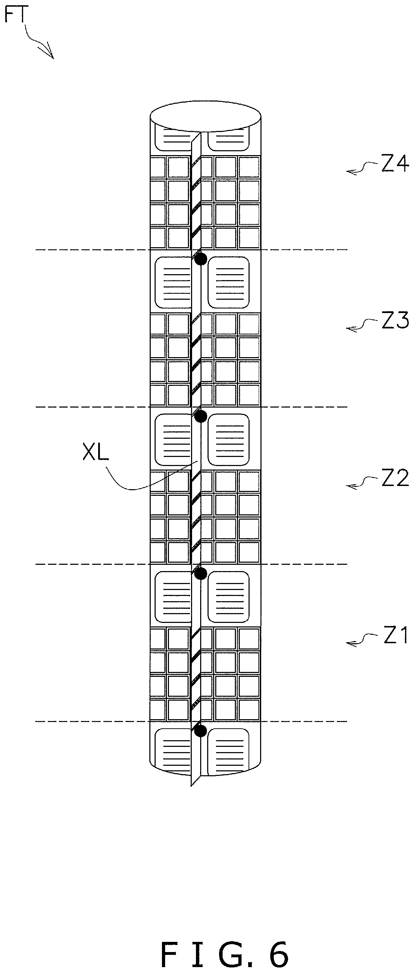

The longitudinal sealing mechanism 26 seals the two longitudinal edges of the film F that have overlapped each other by the former 25. The longitudinal sealing mechanism 26 has a heater. The heat that the heater emits temporarily softens the overlapping portion of the film F, whereby sealing takes place. Because of this, as shown in FIG. 6, the longitudinal seal portion XL is formed in the film F, and a film tube FT having the shape of a tube is created.

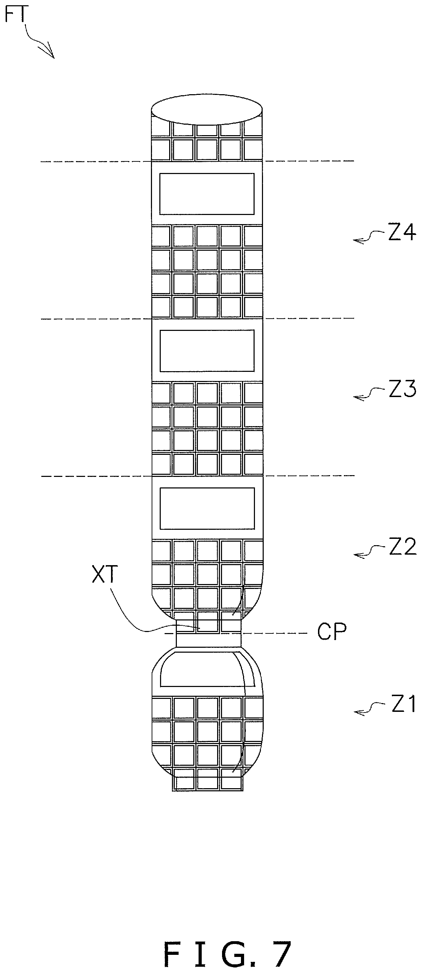

Returning to FIG. 5, the transverse sealing mechanism 72 seals the two portions of the film tube FT that are opposed to each other. The transverse sealing mechanism 27 has a first member 27a and a second member 27b that are opposite to each other via the conveyance path. The first member 27a and the second member 27b can be moved toward each other and away from each other by a motor not shown in the drawing. When the first member 27a and the second member 27b are moved toward each other, the opposing portions of the film tube FT contact each other. The first member 27a and the second member 27b both have a heater. The heat that the heaters emit temporarily softens the contacting portions of the film tube FT, whereby sealing takes place. Because of this, as shown in FIG. 7, the transverse seal portion XT is formed in the film tube FT. Each time the operation of the transverse sealing mechanism 27 ends, the film tube FT is filled with one bag's worth of the articles via the space inside the former 25.

Returning to FIG. 5, the cutting mechanism 28 is provided in the transverse sealing mechanism 27. The cutting mechanism 28 has a blade 28a and a receiver 28b. The blade 28a is provided in the first member 27a and can extend out from and retract into the first member 27a. The receiver 28b is provided in the second member 27b and can receive the extended blade 28a. In the cutting operation of the cutting mechanism 28, the blade 28a extends out toward the receiver 28b. Because of this, an individual product P is cut off. As shown in FIG. 7, a cutting position CP where the cutting mechanism 28 cuts is in the transverse seal portion XT.

Returning to FIG. 5, the photoelectric sensor 29 is for reading the reference marks M provided on the film F. Output signals of the photoelectric sensor 29 are used to decide the operation timings of the transverse sealing mechanism 27 and the cutting mechanism 28.

### (3-3) Inspection Unit 30

Returning to FIG. 4, the inspection unit 30 is for performing a quality inspection of the products P and outputting inspection results as to whether the products P are conforming products or nonconforming products. The inspection unit 30 is, for example, a metal detector or an X-ray foreign object detector. The inspection unit 30 sends the inspection results to the computer 50.

### (3-4) First Information Acquisition Unit 41

The first information acquisition unit 41 is disposed near the inspection unit 30 and reads the individual identification information I from the print surfaces of the products P. A reading device used for the first information acquisition unit 41 includes a camera and an image processing unit for recognizing the individual identification information I. The image processing unit is configured by software or hardware. The image processing unit may be embedded into the camera or may be implemented in a device separate from the camera. The first information acquisition unit 41 sends to the computer 50 the individual identification information I that it has read from the products P.

### (3-5) Computer 50

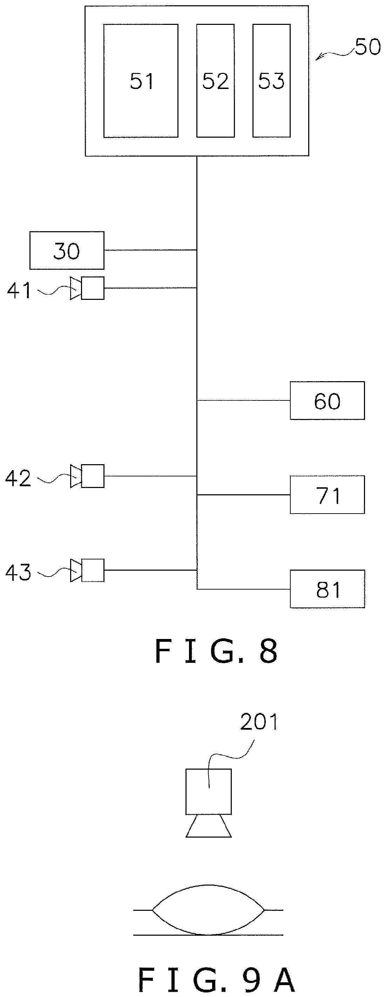

As shown in FIG. 8, the computer 50 is connected to the inspection unit 30, the first information acquisition unit 41, the second information acquisition unit 42, the third information acquisition unit 43, the sorting unit 60, and so forth. The computer 50 has a storage unit 51, a nonconforming product verification unit 52, and a conforming product verification unit 53.

The storage unit 51 associates and stores, with the inspection results of the inspection unit 30, the individual identification information I that the first information acquisition unit 41 has read.

The nonconforming product verification unit 52 verifies that the products P that have reached the nonconforming product retention unit 70 are nonconforming products as described later.

The conforming product verification unit 53 verifies that the products P that have reached the box packing unit 80 are conforming products as described later.

The storage unit 51, the nonconforming product verification unit 52, and the conforming product verification unit 53 are realized by, for example, a CPU, a memory, and software of the computer 50.

### (3-6) Sorting Unit 60

Returning to FIG. 4, the sorting unit 60 sorts nonconforming products of the products P to the nonconforming product retention unit 70, and sorts conforming products of the products P to the box packing unit 80, in accordance with the inspection results received from the inspection unit 30.

### (3-7) Nonconforming Product Retention Unit 70

The nonconforming product retention unit 70 is for retaining the products P that have been determined to be nonconforming products by the inspection unit 30 in order to prepare disposal of those products P. The nonconforming product retention unit 70 is provided with an alert unit 71 that issues an alert using sound or light.

### (3-8) Second Information Acquisition Unit 42

The second information acquisition unit 42 reads the individual identification information I from the products P that have been conveyed to the nonconforming product retention unit 70. The physical configuration of the second information acquisition unit 42 is the same as that of the first information acquisition unit 41. The individual identification information I that has been read by the second information acquisition unit 42 is sent to the nonconforming product verification unit 52 of the computer 50. The nonconforming product verification unit 52 compares the individual identification information I that it has received with the information stored in the storage unit 51, and verifies that the individual identification information I relates to a nonconforming product of the products P. Because of this, whether or not all the nonconforming products that have been discovered by the inspection unit 30 have been put into the nonconforming product retention unit 70 can be verified. The alert unit 71 may issue an alert in a case where not all the nonconforming products have reached the nonconforming product retention unit 70. Moreover, the alert unit 71 may issue an alert in a case where the individual identification information I that has been read by the second information acquisition unit 42 relates to a conforming product of the products P.

### (3-9) Box Packing Unit 80

The box packing unit 80 is for collecting plural products P and packing them into packing boxes. The box packing unit 80 is provided with an alert unit 81 that issues an alert using sound or light.

### (3-10) Third Information Acquisition Unit 43

The third information acquisition unit 43 reads the individual identification information I from the products P that have been conveyed to the box packing unit 80. The physical configuration of the third information acquisition unit 43 is the same as that of the first information acquisition unit 41. The individual identification information I that has been read by the third information acquisition unit 43 is sent to the conforming product verification unit 53 of the computer 50. The conforming product verification unit 53 compares the individual identification information I that it has received with the information stored in the storage unit 51, and verifies that the individual identification information I relates to a conforming product of the products P. The alert unit 71 may issue an alert in a case where the individual identification information I that has been read by the third information acquisition unit 43 relates to a nonconforming product of the products P.

### (4) Characteristics

### (4-1)

The inspection results are associated with the individual identification information I that has been printed on each product P. Consequently, by reading the individual identification information I, whether the products P are conforming products or nonconforming products can be grasped.

### (4-2)

Plural pieces of the same individual identification information I are printed on each of the first surface S1 and the second surface S2. Consequently, individual identification is possible when the first information acquisition unit 41 reads any of the first surface S1 and the second surface S2.

### (4-3)

20% or more or 50% or more of the area of the print surfaces is the individual identification information I. Consequently, it is easy for the first information acquisition unit 41 to read the individual identification information I.

### (4-4)

The sorting unit 60 discharges nonconforming products on the basis of the inspection results associated with the individual identification information I. Consequently, the risk that nonconforming products could be handled as conforming products can be reduced.

### (4-5)

It is verified that the nonconforming products have been conveyed to the nonconforming product retention unit 70. Consequently, whether or not all the nonconforming products that have been discovered by the inspection unit 30 have been put into the nonconforming product retention unit 70 can be verified, so the risk that nonconforming products could be handled as conforming products can be reduced even more.

### (4-6)

It is verified that the conforming products have been conveyed to the box packing unit 80. Consequently, nonconforming products can be inhibited from reaching the box packing unit 80 and being shipped.

### (5) Example Modifications

Example modifications of the above embodiment will be described below. Multiple example modifications may be combined with each other.

### (5-1) Reading Device

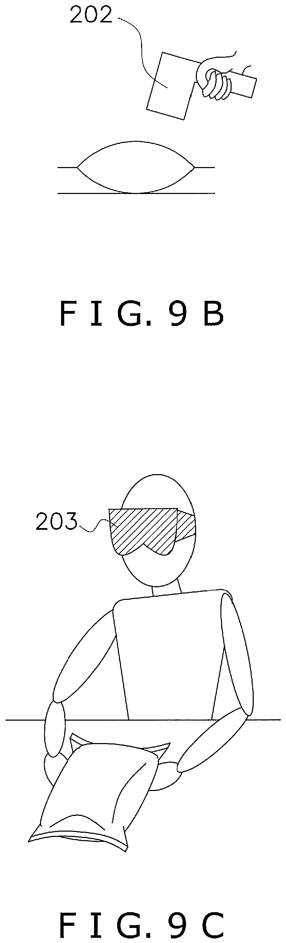

Various devices other than a camera are conceivable as the reading device used for the first information acquisition unit 41, the second information acquisition unit 42, and the third information acquisition unit 43. The reading device may, as mentioned before, be a camera 201 such as shown in FIG. 9A. Alternatively, the reading device may be a barcode reader 202 shown in FIG. 9B. Alternatively, the reading device may be a wearable terminal 203 such as the smart glasses shown in FIG. 9C.

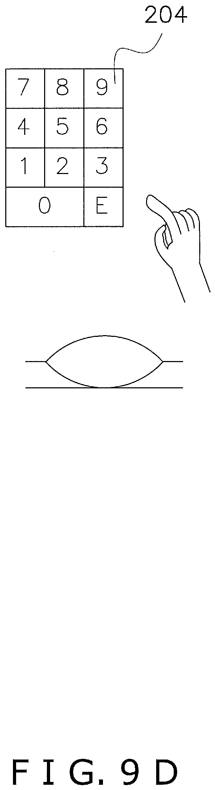

Moreover, to provide against a case where reading by the reading device fails, the reading device may also have, as shown in FIG. 9D, a keyboard 204 for inputting the individual identification information I that has been written in numbers or characters.

These reading devices are connected by wires or connected wirelessly to the computer 50.

### (5-2) Printing Form of Individual Identification Information I

The printing form of the individual identification information I is digital watermarks that are imperceptible to human sight instead of barcodes, two-dimensional barcodes, and dot codes.

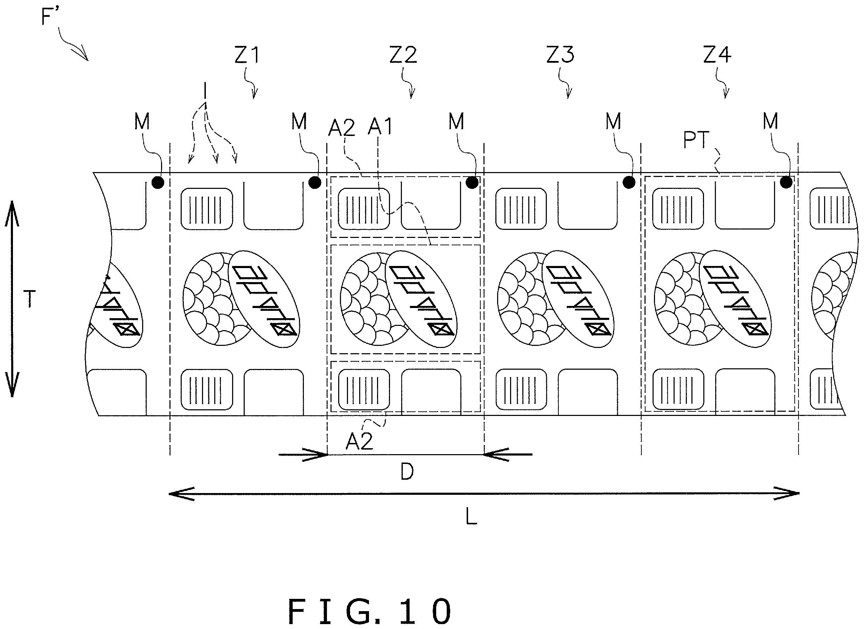

FIG. 10 shows a film F' for packaging pertaining to an example modification. The film F', like the film F, is set in the bag-making and packaging machine 20. The pattern PT includes pictures, photographs, characters, shapes, and so forth that are perceptible to human sight. The individual identification information I is included in the pattern PT in gradations of pixels or some other form. The individual identification information I need not be perceptible to human sight. One written representation of the individual identification information I is a square having 1 cm sides, for example. The digital watermarks are not limited to those described above, and all forms of digital watermarks can be employed.

Adjacent pieces of the individual identification information I are disposed substantially with no space between them. The percentage of the area of the print surface occupied by the individual identification information I is 20% or more and preferably 50% or more.

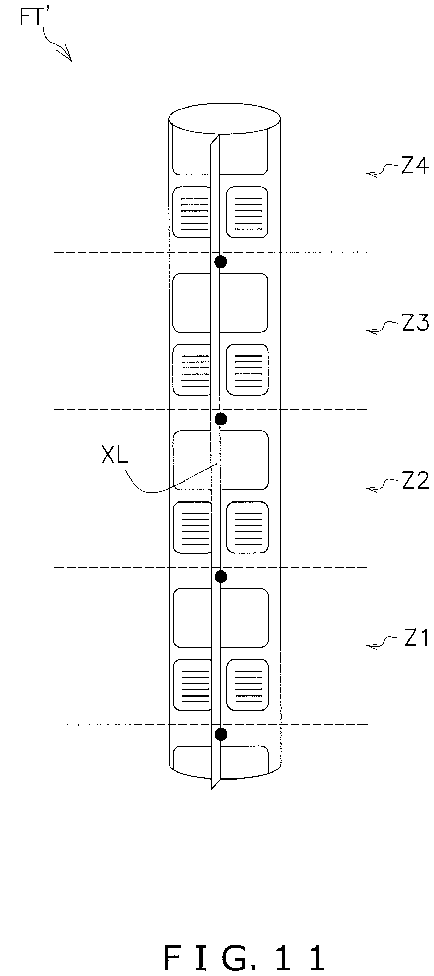

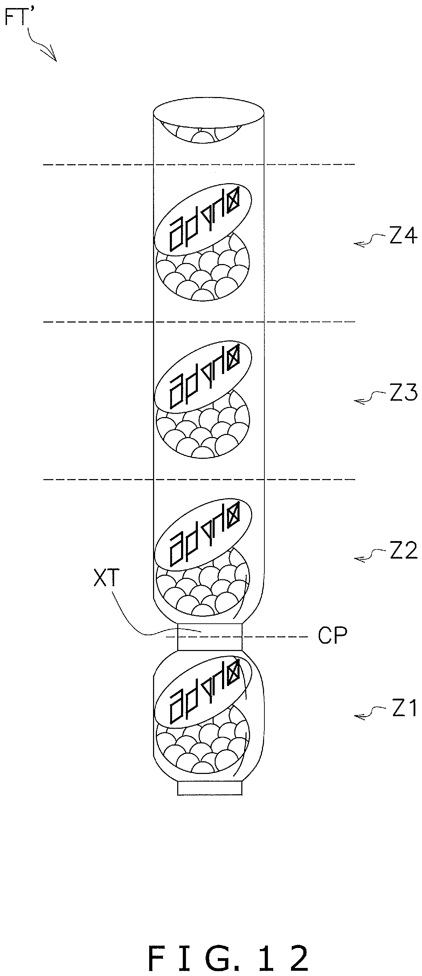

FIG. 11 and FIG. 12 show a film tube FT' formed of the film F'.

According to this configuration, there is little concern of inconveniencing consumers and others who do not need the individual identification information I.

### (5-3) Inspection Device

The inspection device included in the inspection unit 30 is not limited to a single device. For example, the inspection unit 30 may also include both a metal detector and an X-ray foreign object detector. The metal detector uses an alternating magnetic field to determine whether or not there are metal foreign objects inside the packaging of the products P. The X-ray foreign object detector uses X-rays to detect various types of foreign objects such as metal or plastic. Moreover, the inspection unit 30 may also include a detector other than a metal detector and an X-ray foreign object detector.

According to this configuration, nonconforming product information can be collectively managed by the storage unit 51, so it is not necessary to provide a sorting unit 60 for each inspection device.

### (5-4) Packaging

In the above embodiment, the products P are packaged by the bags B that have been formed of the film F. Instead of this, the packaging of the products P may also be boxes made of paper, plastic, or other materials. Outer surfaces of the boxes are the print surfaces of the products P. The individual identification information I is printed on the print surfaces.

### <Second Embodiment>

### (1) Configuration

A product management system 90' pertaining to a second embodiment manages a target different from that of the product management system 90 pertaining to the first embodiment.

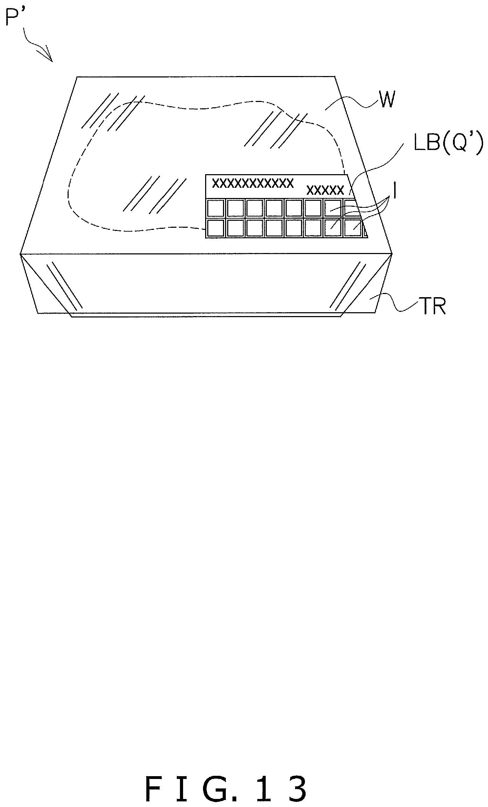

FIG. 13 is an exterior view of a product P' that the product management system 90' manages. The product P' is an article placed on a tray TR and packaged in a wrap W. The article includes many different types of articles and is, for example, a food. What is called food here includes medical products. The individual identification information I is printed on a print surface of the product P'. What is called a print surface Q' in the present embodiment means a label LB adhered to the top of the wrap film.

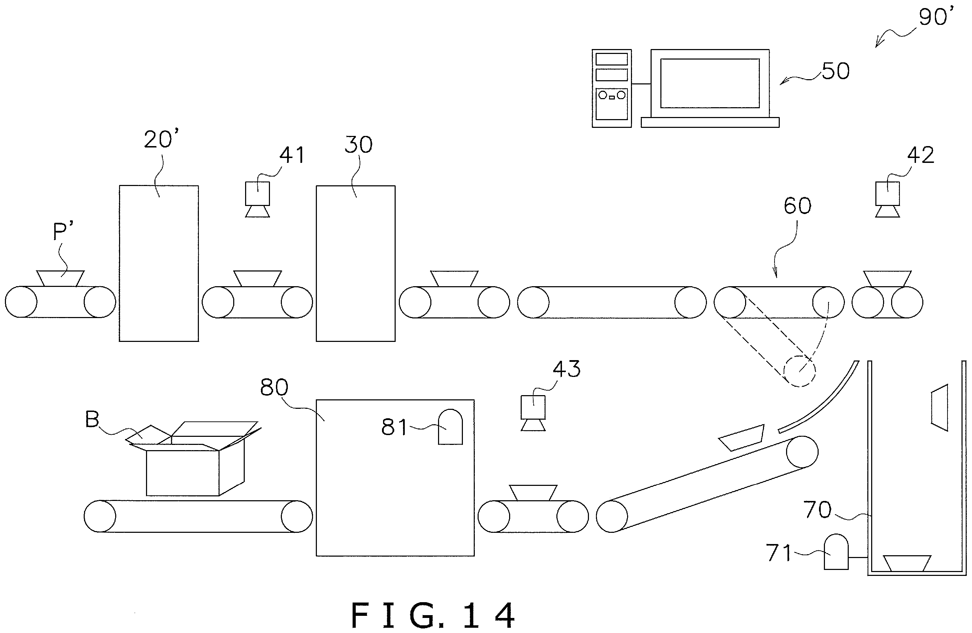

FIG. 14 shows the configuration of the product management system 90'. The product management system 90' differs from the product management system 90 pertaining to the first embodiment in that it has a packaging unit 20' instead of the weighing machine 10 and the bag-making and packaging machine 20. The packaging unit 20' packages in the wrap W the tray TR on which the article has been placed and thereafter adheres to the wrap W the label LB on which the individual identification information I has been printed.

### (2) Characteristics

The individual identification information I is printed on the labels of the products P'. Consequently, the individual identification information I corresponds to the products P'.

### (3) Example Modifications

The example modifications of the first embodiment may be applied to the present embodiment. According to the invention, the individual identification information I is printed on the print surfaces of the products P' in the form of digital watermarks.

### <Third Embodiment>

A product management system 90" pertaining to a third embodiment manages a target different from that of the product management system 90 pertaining to the first embodiment.

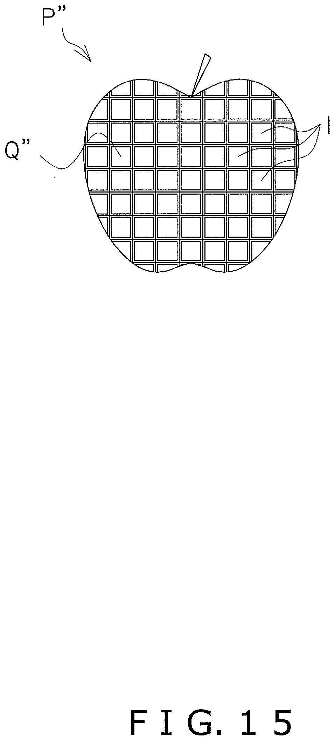

FIG. 15 is an exterior view of a product P" that the product management system 90" manages. The product P" is an unpackaged article. The article can be many different types of articles and is, for example, a food. What is called food here also includes medical products. The product P" is, for example, a fruit. The individual identification information I is printed on a print surface of the product P". What is called a print surface Q" in the present embodiment means the outer surface of the product P".

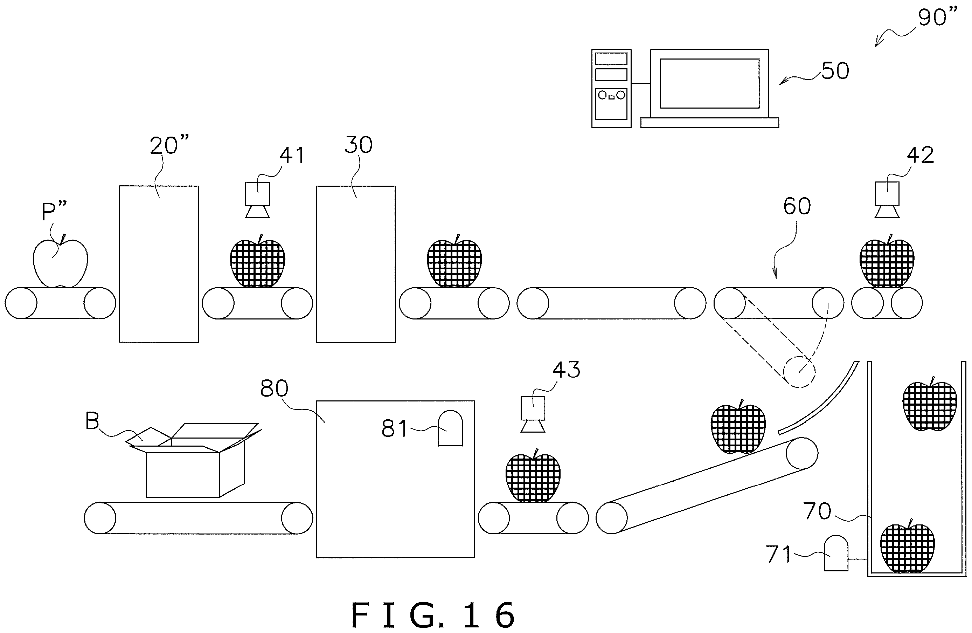

FIG. 16 shows the configuration of the product management system 90". The product management system 90" differs from the product management system 90 pertaining to the first embodiment in that it has a printing unit 20" instead of the weighing machine 10 and the bag-making and packaging machine 20. The printing unit 20" prints the individual identification information I on the product P". It is preferred that the ink used for the printing be edible.

### (2) Characteristics

The individual identification information I is printed on the outer surfaces of the products P". Consequently, the individual identification information I corresponds to the products P".

### (3) Example Modifications

The example modifications of the first embodiment may be applied to the present embodiment. According to the invention, the individual identification information I is printed on the print surfaces of the products P' in the form of digital watermarks.

### [2. Product Processing Device]

Embodiments of a product processing device pertaining to the invention will be described below using the drawings.

### <First Embodiment>

### (1) Product P Packaged in Film F

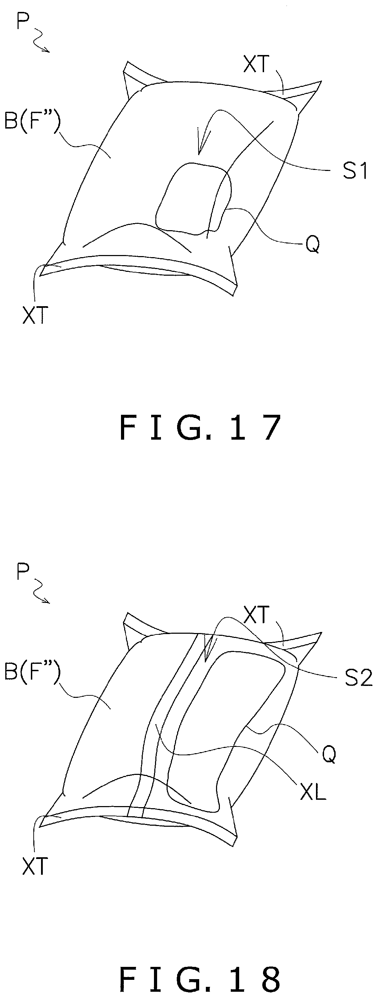

FIG. 17 and FIG. 18 are exterior views of a product P that a product processing device 1020 pertaining to a first embodiment of the invention handles. The product P is packaged by a film F" for packaging. The article packaged by the film F" can be many different types of articles and is, for example, a food. What is called food here includes medical products. The film F" forms a bag B. FIG. 17 shows a first surface S1 of the bag B, and FIG. 18 shows a second surface S2 of the bag B. The second surface S2 is positioned on the opposite side of the first surface S1. The bag B has a longitudinal seal portion XL on the side of the second surface S2. The bag B has transverse seal portions XT on two edges that are opposite to each other.

Individual identification information I is printed on print surfaces Q of the product P. What is called print surfaces Q in the present embodiment means areas of the packaging film F" in which information is printed by a printing unit 1023 described later.

### (2) Film F"

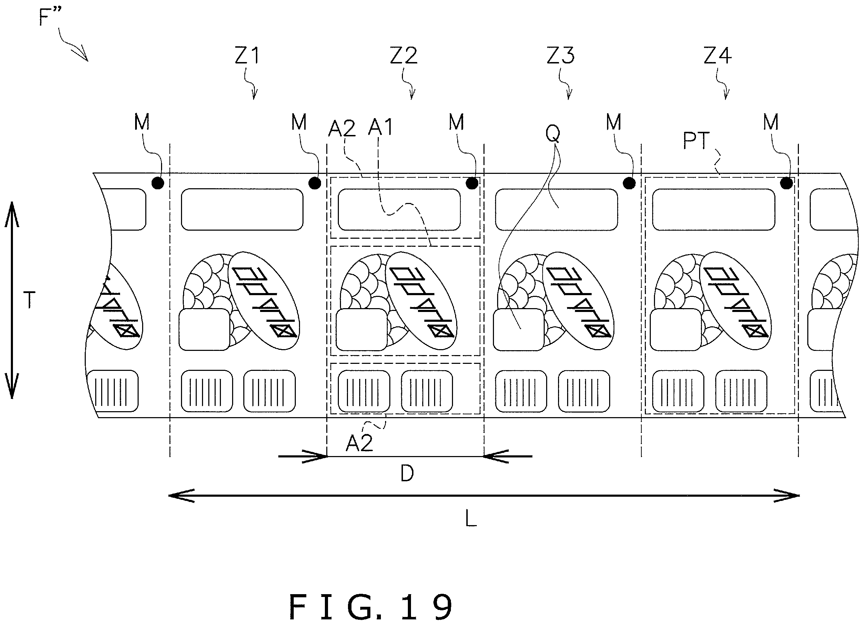

FIG. 19 shows the film F" for packaging the product P. The film F" extends long in a longitudinal direction L and has a fixed width that spans in a transverse direction T perpendicular to the longitudinal direction L. A pattern PT corresponding to one bag B is iteratively printed every dimension D on the film F". That is, each zone Z1, zone Z2, zone Z3, and zone Z4 has the pattern PT and is used for forming one bag B. When the film F" is finally processed into a bag B, the dimension D becomes the distance between the upper edge and the lower edge of the bag B or the distance between the left edge and the right edge of the bag B depending on the design of the bag B.

Each zone has a first area A1 and a second area A2. The first area A1 is a portion that corresponds to the first surface S1 of the bag B. The second area A2 is a portion that corresponds to the second surface S2 of the bag B.

The pattern PT includes a reference mark M. The reference mark M is for being read by a photoelectric sensor 29 described later. The reference mark M may be in any of the first area A1 and the second area A2.

The pattern PT includes lines or shapes that define the print surfaces Q. The print surfaces Q are in both the first area A1 and the second area A2. Instead of this, the print surface Q may be in either one of the first area A1 or the second area A2.

### (3) Product Processing Device 1020

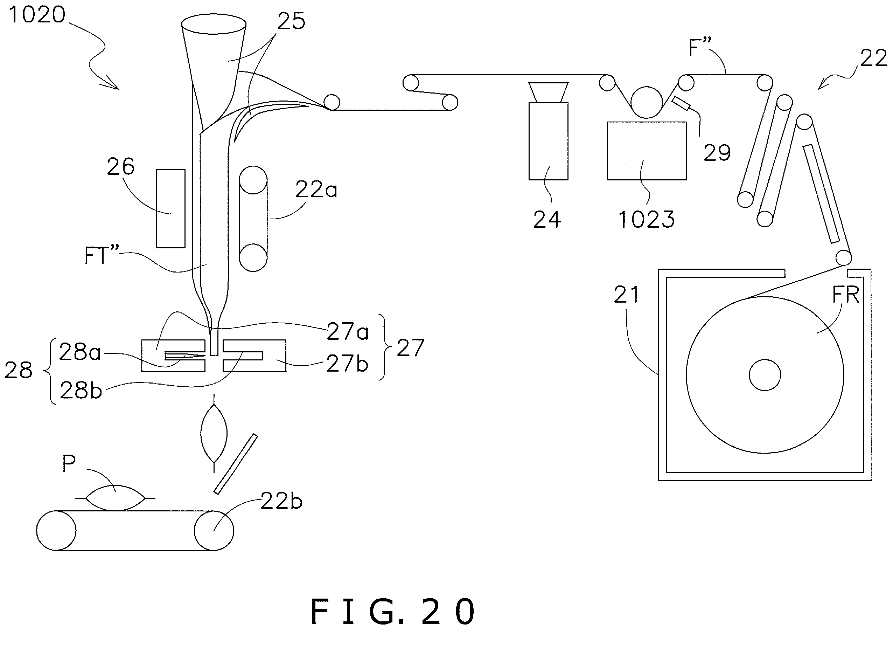

FIG. 20 shows the product processing device 1020 pertaining to the first embodiment of the invention. The product processing device 1020 is configured as a bag-making and packaging machine. The product processing device 1020 performs a process in which the products P are manufactured by packaging the article in the bags B formed by the film F".

The product processing device 1020 has a roll holding unit 21, a conveyance mechanism 22, a printing unit 1023, a printing inspection unit 24, a former 25, a longitudinal sealing mechanism 26, a transverse sealing mechanism 27, a cutting mechanism 28, and a photoelectric sensor 29. The configuration of the product processing device 20 mechanically is substantially the same as that of the bag-making and packaging machine 20 shown in FIG. 5 but the function of the printing unit 1023 is different.

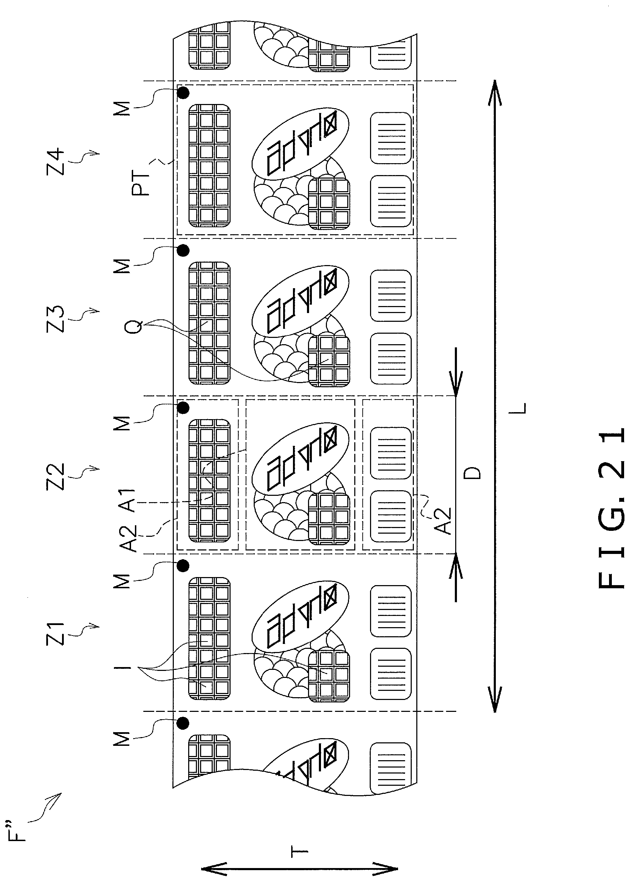

The printing unit 1023 prints the individual identification information I on the print surfaces Q of the film F" that is being conveyed. The printing unit 1023 includes a thermal print head, for example. FIG. 21 shows the film F" on which the individual identification information I has been printed by the printing unit 1023.

Each bag B has different individual identification information I. Plural pieces of the same individual identification information I are printed in the first area A1 of one bag B. Plural pieces of the same individual identification information I are printed in the second area A2 of one bag B. The plural pieces of individual identification information I printed in the first area A1 of one bag B and the plural pieces of individual identification information I printed in the second area A2 of the same bag B are the same.

The individual identification information I is printed in the form of optically readable codes, such as barcodes, two-dimensional barcodes, and dot codes. Adjacent pieces of the individual identification information I are disposed substantially with no space between them. The percentage of the area of the print surfaces Q occupied by the individual identification information I is 20% or more and preferably 50% or more.

The individual identification information I may be numbers. Moreover, the individual identification information I printed on the print surfaces Q included in each iterative pattern PT may be consecutive numbers. For example, the individual identification information I printed on the print surfaces Q of zone Z1, zone Z2, zone Z3, and zone Z4 increases by one at a time in this order.

It is preferred that the printing unit 23 print, in addition to the individual identification information I printed in the form of codes, a written representation of the individual identification information I in the form of numerals or characters. Moreover, the printing unit 23 may print, in the form of characters, predetermined information such as the date of manufacture on the print surfaces Q of the film F.

### (4) Reading Device

Various devices are conceivable as the reading device for reading the individual identification information I. For example, the reading device may be the camera 201 shown in FIG. 9A. Alternatively, the reading device may be the barcode reader 202 shown in FIG. 9B. Alternatively, the reading device may be the wearable terminal 203 such as the smart glasses shown in FIG. 9C. These reading devices have an image processing unit that extracts codes from images, for example. The image processing unit is configured by software or hardware.

Moreover, to provide against a case where reading by the reading device fails, the reading device may have, as shown in FIG. 9D, a keyboard 204 for inputting the individual identification information I that has been written in numerals or characters.

These reading devices may be configured as an information acquisition unit that is part of the product processing device 1020.

### (5) Characteristics

### (5-1)

Plural pieces of the same individual identification information I are printed on the print surfaces Q. Consequently, the probability that the reading device would recognize the individual identification information I increases, so the efficiency of individual identification is improved.

### (5-2)

Plural pieces of the same individual identification information I are printed on each of the first surface S1 and the second surface S2. Consequently, individual identification is possible when the reading device reads any of the first surface S1 and the second surface S2.

### (5-3)

There is no space between adjacent pieces of the individual identification information I. Consequently, the probability that the reading device would recognize the individual identification information I increases even more, so the efficiency of individual identification is improved.

### (5-4)

The individual identification information I is printed on 20% or more or 50% or more of the area of the print surfaces Q. Consequently, it is easy for the reading device to read the individual identification information I.

### (5-5)

The products P are a food. Consequently, the efficiency of individual identification is improved in regard to food.

### (5-6)

The product processing device 20 may further have an information acquisition unit. In this case, processing details can be verified on the basis of the individual identification information I that the information acquisition unit has read.

### (6) Example Modifications

Example modifications of the above embodiment will be described below. Multiple example modifications may be combined with each other.

### (6-1) Packaging

In the above embodiment, the products P are packaged by the bags B that have been formed of the film F". Instead of this, the packaging of the products P may be boxes made of paper, plastic, or other materials. Outer surfaces of the boxes are the print surfaces of the products P. The individual identification information I is printed on the print surfaces.

According to this configuration, the packaging is boxes. Consequently, the efficiency of individual identification is improved in regard to products packaged by boxes.

### (6-2) Printing Form of Individual Identification Information I

The printing form of the individual identification information I is digital watermarks that are imperceptible to human sight instead of barcodes, two-dimensional barcodes, and dot codes.

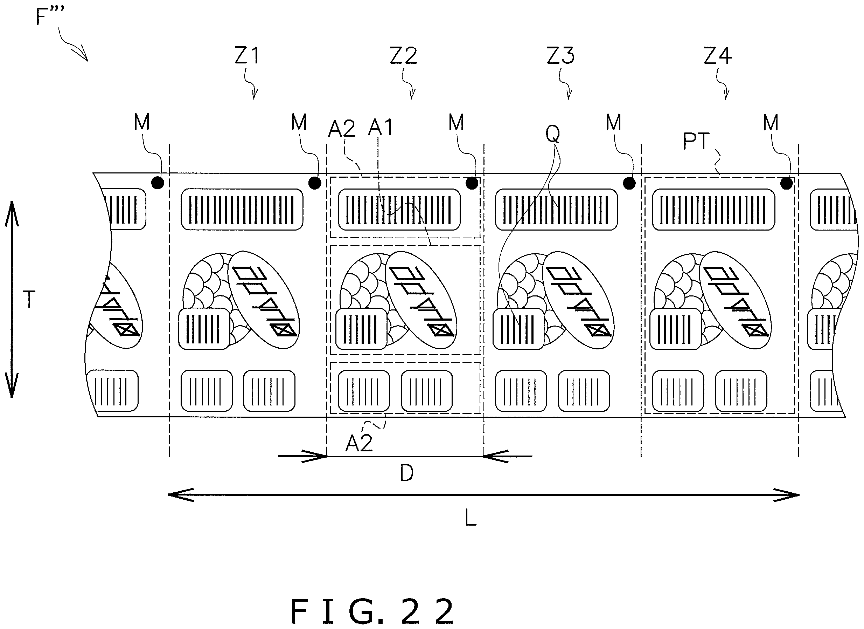

FIG. 22 shows a film F‴ for packaging pertaining to an example modification. The film F‴, like the film F", is set in the product processing device 1020. The content to be printed on the print surfaces Q includes pictures, photographs, characters, shapes, and so forth that are perceptible to human sight. The individual identification information I is included in the printed content in gradations of pixels or some other form. The individual identification information I need not be perceptible to human sight. One written representation of the individual identification information I is a square having 1 cm sides, for example. The digital watermarks are not limited to those described above, and all forms of digital watermarks can be employed.

Adjacent pieces of the individual identification information I are disposed substantially with no space between them. The percentage of the area of the print surfaces Q occupied by the individual identification information I is 20% or more and preferably 50% or more.

According to this configuration, there is little concern of inconveniencing consumers and others who do not need the individual identification information I.

### <Second Embodiment>

### (1) Product P' Including Tray TR

FIG. 13 is an exterior view of a product P' that a product processing device 1090 pertaining to a second embodiment of the invention processes. The product P' is an article placed on a tray TR and packaged in a wrap W (so-called plastic wrap). The article can be many different types of articles and is, for example, a food. What is called food here also includes medical products. A label LB is adhered to the wrap W.

The individual identification information I is printed on a print surface Q' of the product P'. What is called the print surface Q' in the present embodiment means the label LB.

### (2) Product Processing Device 1090

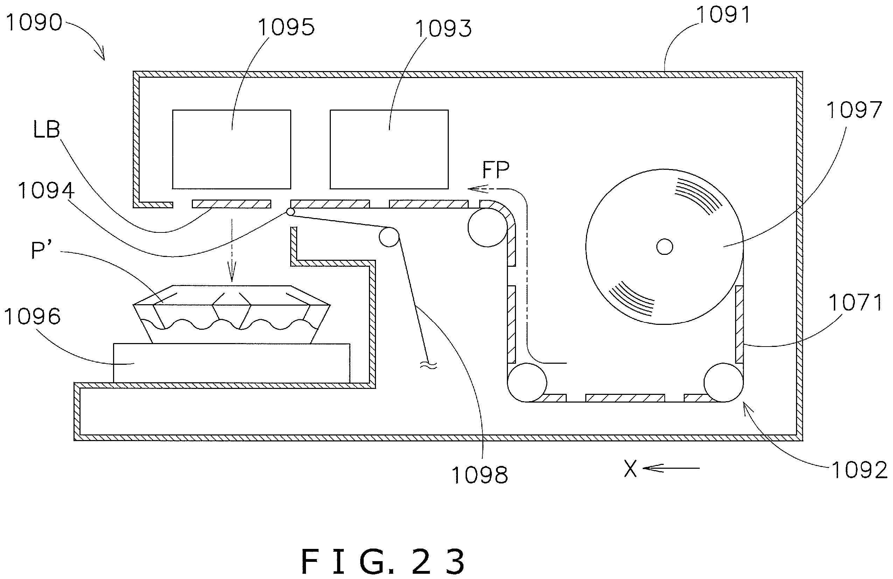

FIG. 23 shows the product processing device 1090 pertaining to the second embodiment of the invention. The product processing device 1090 is configured as a label adhering device. The product processing device 1090 performs a process in which printing is performed on the labels LB and the labels LB are adhered to the products P'. The product processing device 1090 has a housing 1091, a conveyance mechanism 1092, a printing unit 1093, a peeling unit 1094, an adhering head 1095, and a placement unit 1096.

### (2-1) Conveyance Mechanism 1092

The conveyance mechanism 1092 is a mechanism that conveys the labels LB along a conveyance path FP in a conveyance direction X. The conveyance path FP starts at a label roll 1097 and leads via the printing unit 1093 to the adhering head 1095.

Unpeeled tape that has been pulled out from the label roll 1097 includes a tape-like backing paper 1098 having multiple labels LB adhered to it. The back surfaces of the labels LB are sticky surfaces coated with glue and are adhered to the backing paper 1098.

### (2-2) Printing Unit 1093

The printing unit 1093 prints the individual identification information I on the labels LB that are the print surfaces Q' of the products P'. FIG. 13 shows the label LB on which the individual identification information I has been printed by the printing unit 1093.

Each label LB has different individual identification information I. Plural pieces of the same individual identification information I are printed on one label LB.

The individual identification information I is printed in the form of optically readable codes, such as barcodes, two-dimensional barcodes, and dot codes. Adjacent pieces of the individual identification information I are disposed substantially with no space between them. The percentage of the area of the print surfaces Q' occupied by the individual identification information I is 20% or more and preferably 50% or more.

Other items relating to the individual identification information I are the same as in the first embodiment. The reading device corresponding to the individual identification information I is also the same as in the first embodiment.

Moreover, the printing unit 1093 may print information such as the price, weight, and expiration date of the products P' in the form of characters on the labels LB.

### (2-3) Peeling Unit 1094

The peeling unit 1094 peels the labels LB from the unpeeled tape to separate the labels LB from the backing paper 1098 and, for example, includes a plate or shaft having an edge or a small roller.

### (2-4) Adhering Head 1095

The adhering head 1095 can suck and hold the labels LB by sucking air. The adhering head 1095 can also jet air to thereby blow the labels LB toward and adhere them to the products P'. The adhering head 1095 is, for example, an air nozzle device connected to an electromagnetic valve connected to both a vacuum pump and an air source.

### (2-5) Placement Unit 1096

The placement unit 1096 is for placing thereon the products P' to which the labels LB are to be adhered. The placement unit 1096 is, for example, a location right under the adhering head 1095 on a conveyor belt. The conveyor belt may have a weighing unit that weighs the weights of the products P'.

### (3) Basic Operation

The conveyance mechanism 1092 conveys along the conveyance path FP the unpeeled tape that has been pulled out from the label roll 1097. Next, the unpeeled tape has the individual identification information I printed on it by the printing unit 1093. Thereafter, the peeling unit 1094 separates the labels LB from the backing paper 1098. The labels LB are delivered to the adhering head 1095.

The adhering head 1095 holds the labels LB by sucking air and stands by until the products P' are placed on the placement unit 1096. Thereafter, when the products P' reach the placement unit 1096, the adhering head 1095 blows the labels LB toward the products P' by jetting air. Because of this, the labels LB are adhered to the products P'.

### (4) Characteristics

Plural pieces of the individual identification information I are printed on the labels LB that become adhered to the products P' including the trays TR. Consequently, the efficiency of individual identification of the products P' including the trays TR is improved.

### (5) Example Modifications

The example modifications of the first embodiment may also be applied to the present embodiment. According to the invention, the individual identification information I printed on the labels LB is printed in the form of digital watermarks.

### <Third Embodiment>

### (1) Unpackaged Product P"

FIG. 15 is an exterior view of a product P" that a product processing device 1130 pertaining to a third embodiment of the invention processes. The product P" is an unpackaged article. The article can be many different types of articles and is, for example, a food. What is called food here also includes medical products. The article is, for example, a fruit.

The individual identification information I is printed on a print surface Q" of the product P". What is called the print surface Q" in the present embodiment means the outer surface of the product P".

### (2) Product Processing Device 1190

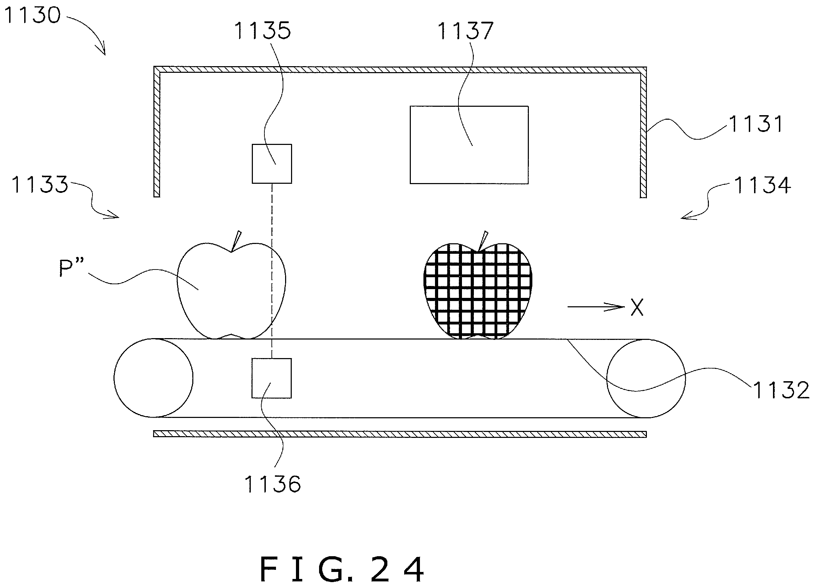

FIG. 24 shows the product processing device 1130 pertaining to the third embodiment of the invention. The product processing device 1130 is configured as an X-ray foreign object detector. The product processing device 1130 performs a process in which it is determined whether the product P" is a conforming product or a nonconforming product by irradiating the product P" with X-rays in order to find foreign objects such as an insect pest from the transmitted radiation. The product processing device 1130 has a housing 1131, a conveyance mechanism 1132, an X-ray source 1135, an X-ray line sensor 1136, and a printing unit 1137.

The conveyance mechanism 1132 conveys the product P" in a conveyance direction X from an inlet 1133 to an outlet 1134. The X-ray source 1135 irradiates the product P" with X-rays. The X-ray line sensor 1136 detects the X-rays transmitted through the product P". The output of the X-ray line sensor 1136 is sent to an image processing unit not shown in the drawing and is used to determine whether or not foreign objects are present.

The printing unit 1137 prints the individual identification information I on the outer surface that is the print surface Q" of the product P". It is preferred that the ink used for the printing be edible. The individual identification information I is different for each product P". Plural pieces of the same individual identification information I are printed on one product P".

The individual identification information I is printed in the form of optically readable codes, such as barcodes, two-dimensional barcodes, and dot codes. Adjacent pieces of the individual identification information I are disposed substantially with no space between them. The percentage of the area of the print surface Q occupied by the individual identification information I is 20% or more and preferably 50% or more.

Other items relating to the individual identification information I are the same as in the first embodiment. The reading device corresponding to the individual identification information I is also the same as in the first embodiment.

### (3) Characteristics

Plural pieces of the individual identification information I are printed on the outer surfaces of the products P". Consequently, the efficiency of individual identification of the products P" is improved.

### (4) Example Modifications

The example modifications of the first embodiment may be applied to the present embodiment. According to the invention, the individual identification information I printed on the print surfaces Q" of the products P" is printed in the form of digital watermarks.

### [3. Bag-making and Packaging Film]

Embodiments of a packaging film pertaining to the invention will be described below using the drawings.

### <First Embodiment>

### (1) Product P Packaged in Film F

FIG. 1 and FIG. 2 are exterior views of a product P packaged by a film F for packaging. The article packaged in the film F can be many different types of articles and is, for example, a food. What is called food here includes medical products. The film F forms a bag B. FIG. 1 shows a first surface S1 of the bag B, and FIG. 2 shows a second surface S2 of the bag B. The second surface S2 is positioned on the opposite side of the first surface S1. The bag B has a longitudinal seal portion XL on the side of the second surface S2. The bag B has transverse seal portions XT on two edges that are opposite to each other.

### (2) Film F

FIG. 3 shows the film F for packaging pertaining to a first embodiment of the invention. The film F extends long in a longitudinal direction L and has a fixed width that spans in a transverse direction T perpendicular to the longitudinal direction L. A pattern PT corresponding to one bag B is iteratively printed every dimension D on the film F. That is, each zone Z1, zone Z2, zone Z3, and zone Z4 has the pattern PT and is used for forming one bag B. When the film F is finally processed into a bag B, the dimension D becomes the distance between the upper edge and the lower edge of the bag B or the distance between the left edge and the right edge of the bag B depending on the design of the bag B.

Each zone has a first area A1 and a second area A2. The first area A1 is a portion that corresponds to the first surface S1 of the bag B. The second area A2 is a portion that corresponds to the second surface S2 of the bag B.

The pattern PT includes a reference mark M. The reference mark M is for being read by a photoelectric sensor 29 of a bag-making and packaging machine 20. The reference mark M may be in any of the first area A1 and the second area A2.

The pattern PT includes unique individual identification information I. That is, each bag B has different individual identification information I. Plural pieces of the same individual identification information I are printed in the first area A1 of one bag B. Plural pieces of the same individual identification information I are printed in the second area A2 of one bag B. The plural pieces of individual identification information I printed in the first area A1 of one bag B and the plural pieces of individual identification information I printed in the second area A2 of the same bag B are the same.

The individual identification information I is printed in the form of optically readable codes, such as barcodes, two-dimensional barcodes, and dot codes. Adjacent pieces of the individual identification information I are disposed substantially with no space between them. The percentage of the area of the pattern PT occupied by the individual identification information I is 20% or more and preferably 50% or more.

The individual identification information I may also be numbers. Moreover, the individual identification information I included in the iterative pattern PT may be consecutive numbers. For example, the individual identification information I included in zone Z1, zone Z2, zone Z3, and zone Z4 increases by one at a time in this order.

It is preferred that the pattern PT include, in addition to the individual identification information I printed in the form of codes, a written representation of the individual identification information I in numerals or characters.

### (3) Bag-making and Packaging Machine 20

FIG. 5 shows the bag-making and packaging machine 20 that uses the film F to create the products P. The film F is set in the bag-making and packaging machine 20. The operation of the bag-making and packaging machine 20 is as has already been described.

As shown in FIG. 6, the longitudinal seal portion XL is formed in the film F by the longitudinal seal mechanism 26, and the film tube FT having the shape of a tube is created. Thereafter, as shown in FIG. 7, the transverse seal portions XT are formed in the film tube FT by the transverse seal mechanism 27. Next, an individual product P is cut off by the cutting mechanism 28. As shown in FIG. 7, a cutting position CP where the cutting mechanism 28 cuts is in the transverse seal portion XT.

### (4) Reading Device

Various devices are conceivable as the reading device for reading the individual identification information I. For example, the reading device may be the camera 201 shown in FIG. 9A. Alternatively, the reading device may be the barcode reader 202 shown in FIG. 9B. Alternatively, the reading device may also be the wearable terminal 203 such as the smart glasses shown in FIG. 9C. These reading devices have an image processing unit that extracts the individual identification information I from images, for example. The image processing unit is configured by software or hardware. The image processing unit may be implemented in a device different from the reading device.

Moreover, to provide against a case where reading by the reading device fails, the reading device may have, as shown in FIG. 9D, a keyboard 204 for inputting the individual identification information I that has been written in numerals or characters.

### (5) Characteristics

### (5-1)

Each bag B has unique individual identification information I that is distinct from that of other bags B. Consequently, the individual identification information I can be utilized for various purposes, such as identifying the manufacturing line, identifying the manufacturing lot, comparing manufacturing conditions and product quality, identifying and disposing of nonconforming products in the manufacturing process, and tracking shipments and circulation.

### (5-2)

Plural pieces of the same individual identification information I are printed on one bag B. Consequently, the probability that the reading device would recognize the individual identification information I increases, so the efficiency of individual identification of the products P is improved.

### (5-3)

Plural pieces of the same individual identification information I are printed on each of the first surface S1 and the second surface S2. Consequently, individual identification is possible when the reading device reads any of the first surface S1 and the second surface S2.

### (5-4)

The individual identification information I can be consecutive numbers. Consequently, it is easy to manage the products P at the manufacturing site, for example.

### (5-5)

20% or more or 50% or more of the area of the pattern PT is the individual identification information I. Consequently, it is easy for the reading device to read the individual identification information I.

### <Second Embodiment>

### (1) Film F'

FIG. 10 shows a film F' for packaging pertaining to a second embodiment of the invention. The film F', like the film F pertaining to the first embodiment, is set in the bag-making and packaging machine 20.

The film F' differs from the film F pertaining to the first embodiment in that the individual identification information I is printed in the form of digital watermarks.

The pattern PT includes pictures, photographs, characters, shapes, and so forth that are perceptible to human sight. The individual identification information I is included in the pattern PT in gradations of pixels or some other form. The individual identification information I need not perceptible to human sight. One written representation of the individual identification information I is a square having 1 cm sides, for example. The digital watermarks are not limited to those described above, and all forms of digital watermarks can be employed.

The pattern PT includes unique individual identification information I. That is, each bag B has different individual identification information I. Plural pieces of the same individual identification information I are printed in the first area A1. Plural pieces of the same individual identification information I are printed in the second area A2. The plural pieces of individual identification information I printed in the first area A1 of one bag B and the plural pieces of individual identification information I printed in the second area A2 of the same bag B are the same.

Adjacent pieces of the individual identification information I are disposed substantially with no space between them. The percentage of the area of the pattern PT occupied by the individual identification information I is 20% or more and preferably 50% or more.

FIG. 11 and FIG. 12 show a film tube FT' formed of the film F'.

### (2) Reading Device

The reading devices and keyboard mentioned in regard to the first embodiment can also be used in regard to the film F'.

### (3) Characteristics

The individual identification information I is printed in the form of digital watermarks. Consequently, there is little concern of inconveniencing consumers and others who do not need the individual identification information I.

### REFERENCE SIGNS LIST

### [1. Product Management System]

- 10:: Weighing Machine
- 20:: Bag-making and Packaging Machine
- 30:: Inspection Unit
- 41:: First Information Acquisition Unit
- 42:: Second Information Acquisition Unit
- 43:: Third Information Acquisition Unit
- 50:: Computer
- 51:: Storage Unit
- 52:: Nonconforming Product Verification Unit
- 53:: Conforming Product Verification Unit
- 60:: Sorting Unit
- 70:: Nonconforming Product Retention Unit
- 80:: Box Packing Unit
- 90, 90', 90":: Product Management Systems
- I:: Individual Identification Information
- P, P', P":: Products

### [2. Product Processing Device]

- 1020:: Product Processing Device
- 21:: Roll Holding Unit
- 22:: Conveyance Mechanism
- 1023:: Printing Unit
- 24:: Printing Inspection Unit
- 25:: Former
- 26:: Longitudinal Sealing Mechanism
- 27:: Transverse Sealing Mechanism
- 28:: Cutting Mechanism
- 1090:: Product Processing Device
- 1093:: Printing Unit
- 1095:: Adhering Head
- 1130:: Product Processing Device
- 1135:: X-ray Source
- 1136:: X-ray Line Sensor
- 1137:: Printing Unit
- F", F"':: Films
- I:: Individual Identification Information
- LB:: Label
- P, P', P":: Products
- Q, Q', Q":: Print surfaces

### [3. Bag-making and Packaging Film]

- 20:: Bag-making and Packaging Machine
- 201:: Camera
- 202:: Barcode Reader
- 203:: Wearable Terminal
- 204:: Keyboard
- A1:: First Area
- A2:: Second Area
- B:: Bag
- D:: Dimension
- F:: Film
- F':: Film
- FR:: Film Roll
- FT:: Film Tube
- FT':: Film Tube
- I:: Individual Identification Information
- P:: Product
- PT:: Pattern
- S1:: First Surface
- S2:: Second Surface

## Claims

1. A product management system (90) that manages a product (P) that is a food and has a print surface, the product management system (90) comprising:
an inspection unit (30) that performs an inspection of the product and outputs an inspection result as to whether the product is a conforming product or a nonconforming product;
a first information acquisition unit (41) that reads, from the product which has plural pieces of individual identification information (I) that are the same printed on the print surface (Q), the individual identification information; and
a storage unit (51) that associates and stores, with the inspection result, the individual identification information that the first information acquisition unit has read;
wherein the individual identification information (I) is printed in the form of digital watermarks.

2. The product management system according to claim 1, wherein the print surface (Q) is an outer surface of the product, a packaging of the product, or a label of the product.

3. The product management system according to claim 1 or claim 2, wherein
the print surface (Q) has at least a first surface and a second surface on an opposite side of the first surface, and
plural pieces of the same individual identification information (I) are printed on each of the first surface and the second surface.

4. The product management system according to any one of claims 1 to 3, wherein plural pieces of the same individual identification information (I) are printed on 20% or more of the area of the print surface (Q).

5. The product management system according to claim 4, wherein plural pieces of the same individual identification information (I) are printed on 50% or more of the area of the print surfaces (Q).

6. The product management system according to any one of claims 1 to 5, further comprising a sorting unit (60) that discharges the product that is the nonconforming product based on the inspection result associated with the individual identification information (I) that the first information acquisition unit (41) has read.

7. The product management system according to any one of claims 1 to 6, further comprising
a nonconforming product retention unit (70) that retains the nonconforming product,
a second information acquisition unit (42) that reads the individual identification information (I) from the product that is conveyed to the nonconforming product retention unit (70), and
a nonconforming product verification unit (52) that queries the storage unit (51) for the inspection result associated with the individual identification information (I) that the second information acquisition unit (42) has read and verifies that the product that is conveyed to the nonconforming product retention unit (70) is the nonconforming product.

8. The product management system according to any one of claims 1 to 7, further comprising
a box packing unit (80) that packs the conforming product into a packing box,
a third information acquisition unit (53) that reads the individual identification information (I) from the product that is conveyed to the box packing unit (80), and
a conforming product verification unit (53) that queries the storage unit (51) for the inspection result associated with the individual identification information (I) that the third information acquisition unit (53) has read and verifies that the product that is conveyed to the box packing unit (80) is the conforming product.

9. A product processing device comprising:
a printing unit (1023) that prints information on a print surface (Q) of a product (P); and
a processing unit that processes the product (P),
wherein the print surface (Q) is an outer surface of the product, a packaging of the product, or a label of the product, and
the printing unit (1023) prints, on the print surface, plural pieces of individual identification information (I) that are the same;
wherein the printing unit (1023) prints plural pieces of the same individual identification information (I) in the form of digital watermarks.

10. The product processing device according to claim 9, wherein
the print surface (Q) has at least a first surface and a second surface on an opposite side of the first surface, and
the printing unit (1023) prints plural pieces of the same individual identification information (I) on each of the first surface and the second surface.

11. The product processing device according to any one of claims 9 to 10, wherein the processing unit includes at least one of
a packaging unit that packages the product (P) and
an inspection unit that inspects whether the product is a conforming product.

12. A packaging film that is set in a bag-making and packaging machine and on which a pattern corresponding to one bag is iteratively printed, wherein the pattern includes plural pieces of unique individual identification information (I) that are the same and wherein the individual identification information (I) is printed in the form of digital watermarks.

13. The packaging film according to claim 12, wherein
the bag includes a first surface and a second surface on an opposite side of the first surface,
the pattern has a first area corresponding to the first surface and a second area corresponding to the second surface, and
the first area and the second area each include plural pieces of the same individual identification information (I).

## Patentansprüche

1. Produktverwaltungssystem (90), das ein Produkt (P) verwaltet, das ein Lebensmittel ist und eine Druckoberfläche aufweist, wobei das Produktverwaltungssystem (90) aufweist:
eine Prüfeinheit (30), die eine Prüfung des Produkts durchführt und ein Prüfergebnis dahingehend ausgibt, ob das Produkt ein konformes Produkt oder ein nicht konformes Produkt ist;
eine erste Informationserfassungseinheit (41), die von dem Produkt, das mehrere Teile individueller Identifikationsinformationen (I) aufweist, die gleich sind und auf die Druckoberfläche (Q) gedruckt sind, die individuellen Identifikationsinformationen liest; und
eine Speichereinheit (51), die die individuellen Identifikationsinformationen, die die erste Informationserfassungseinheit gelesen hat, mit dem Prüfergebnis verknüpft und speichert;
wobei die individuelle Identifikationsinformationen (I) in Form von digitalen Wasserzeichen gedruckt sind.

2. Produktverwaltungssystem nach Anspruch 1, wobei die Druckoberfläche (Q) eine Außenfläche des Produkts, eine Verpackung des Produkts oder ein Etikett des Produkts ist.

3. Produktverwaltungssystem nach Anspruch 1 oder Anspruch 2, wobei
die Druckoberfläche (Q) mindestens eine erste Oberfläche und eine zweite Oberfläche auf einer der ersten Oberfläche gegenüberliegenden Seite aufweist, und
mehrere Teile der gleichen individuellen Identifikationsinformationen (I) auf jede der ersten Oberfläche und der zweiten Oberfläche gedruckt sind.

4. Produktverwaltungssystem nach einem der Ansprüche 1 bis 3, wobei mehrere Teile der gleichen individuellen Identifikationsinformationen (I) auf 20 % oder mehr der Fläche der Druckoberfläche (Q) gedruckt sind.

5. Produktverwaltungssystem nach Anspruch 4, wobei mehrere Teile der gleichen individuellen Identifikationsinformationen (I) auf 50 % oder mehr der Fläche der Druckoberflächen (Q) gedruckt sind.

6. Produktverwaltungssystem nach einem der Ansprüche 1 bis 5, das ferner eine Sortiereinheit (60) aufweist, die das Produkt, das das nicht konforme Produkt ist, basierend auf dem Prüfergebnis aussondert, das mit den individuellen Identifikationsinformationen (I) verbunden ist, die die erste Informationserfassungseinheit (41) gelesen hat.

7. Produktverwaltungssystem nach einem der Ansprüche 1 bis 6, das ferner aufweist:
eine Rückhalteeinheit (70) für nicht konforme Produkte, die das nicht konforme Produkt zurückhält,
eine zweite Informationserfassungseinheit (42), die die individuelle Identifikationsinformationen (I) von dem Produkt liest, das zu der Rückhalteeinheit (70) für nicht konforme Produkte befördert wird, und
eine Verifizierungseinheit (52) für nicht konforme Produkte, die die Speichereinheit (51) nach dem Prüfergebnis abfragt, das mit der individuellen Identifikationsinformationen (I) verbunden ist, die die zweite Informationserfassungseinheit (42) gelesen hat, und die verifiziert, dass das Produkt, das zu der Rückhalteeinheit (70) für das nicht konforme Produkt befördert wird, das nicht konforme Produkt ist.

8. Produktverwaltungssystem nach einem der Ansprüche 1 bis 7, das ferner aufweist:
eine Schachtelverpackungseinheit (80), die das konforme Produkt in eine Verpackungsschachtel verpackt,
eine dritte Informationserfassungseinheit (53), die die individuellen Identifikationsinformationen (I) von dem Produkt liest, das zur Schachtelverpackungseinheit (80) befördert wird, und
eine Verifizierungseinheit (53) für konforme Produkte, die die Speichereinheit (51) nach dem Prüfergebnis abfragt, das mit den individuellen Identifikationsinformationen (I) verbunden ist, die die dritte Informationserfassungseinheit (53) gelesen hat, und die verifiziert, dass das Produkt, das zu der Schachtelverpackungseinheit (80) befördert wird, das konforme Produkt ist.

9. Produktverarbeitungsvorrichtung, die aufweist:
eine Druckeinheit (1023), die Informationen auf eine Druckoberfläche (Q) eines Produkts (P) druckt; und
eine Verarbeitungseinheit, die das Produkt (P) verarbeitet,
wobei die Druckoberfläche (Q) eine Außenfläche des Produkts, eine Verpackung des Produkts oder ein Etikett des Produkts ist, und
die Druckeinheit (1023) mehrere Teile individueller Identifikationsinformationen (I), die gleich sind, auf die Druckoberfläche druckt;
wobei die Druckeinheit (1023) mehrere Teile der gleichen individuellen Identifikationsinformationen (I) in Form von digitalen Wasserzeichen druckt.

10. Produktverarbeitungsvorrichtung nach Anspruch 9, wobei
die Druckoberfläche (Q) mindestens eine erste Oberfläche und eine zweite Oberfläche auf einer der ersten Oberfläche gegenüberliegenden Seite aufweist, und
die Druckeinheit (1023) mehrere Teile der gleichen individuellen Identifikationsinformationen (I) auf jede der ersten Oberfläche und der zweiten Oberfläche druckt.

11. Produktverarbeitungsvorrichtung nach einem der Ansprüche 9 bis 10, wobei die Verarbeitungseinheit mindestens eines aufweist von:
eine Verpackungseinheit, die das Produkt (P) verpackt, und
eine Prüfeinheit, die prüft, ob das Produkt ein konformes Produkt ist.

12. Verpackungsfolie, die in eine Beutelherstellungs- und -Verpackungsmaschine eingesetzt wird und auf die ein einem Beutel entsprechendes Muster iterativ gedruckt wird, wobei das Muster mehrere Teile eindeutiger individueller Identifikationsinformationen (I) aufweist, die gleich sind, und wobei die individuellen Identifikationsinformationen (I) in Form digitaler Wasserzeichen gedruckt wird.

13. Verpackungsfolie nach Anspruch 12, wobei
der Beutel eine erste Oberfläche und eine zweite Oberfläche auf einer der ersten Oberfläche gegenüberliegenden Seite aufweist,
das Muster einen ersten Bereich, der der ersten Oberfläche entspricht, und einen zweiten Bereich aufweist, der der zweiten Oberfläche entspricht, und der erste Bereich und der zweite Bereich jeweils mehrere Teile der gleichen individuellen Identifikationsinformationen (I) aufweist.

## Revendications

1. Système de gestion de produit (90) qui gère un produit (P) qui est un aliment et qui a une surface d'impression, le système de gestion de produit (90) comprenant :
une unité d'inspection (30) qui effectue une inspection du produit et délivre un résultat d'inspection indiquant si le produit est un produit conforme ou un produit non conforme ;
une première unité d'acquisition d'informations (41) qui lit, à partir du produit qui comporte plusieurs éléments d'informations d'identification individuelles (I) qui sont les mêmes imprimés sur la surface d'impression (Q), les informations d'identification individuelles ; et
une unité de stockage (51) qui associe et stocke, avec le résultat de l'inspection, les informations d'identification individuelles que la première unité d'acquisition d'informations a lues ;
dans lequel les informations d'identification individuelles (I) sont imprimées sous forme de filigranes numériques.

2. Système de gestion de produit selon la revendication 1, dans lequel la surface d'impression (Q) est une surface extérieure du produit, un emballage du produit ou une étiquette du produit.

3. Système de gestion de produit selon la revendication 1 ou la revendication 2, dans lequel
la surface d'impression (Q) comporte au moins une première surface et une seconde surface sur un côté opposé de la première surface, et
plusieurs morceaux de la même information d'identification individuelle (I) sont imprimés sur chacune des première et deuxième surfaces.

4. Système de gestion de produits selon l'une quelconque des revendications 1 à 3, dans lequel plusieurs éléments des mêmes informations d'identification individuelles (I) sont imprimés sur 20 % ou plus de la surface d'impression (Q).

5. Système de gestion de produits selon la revendication 4, dans lequel plusieurs éléments des mêmes informations d'identification individuelles (I) sont imprimés sur 50 % ou plus de la surface des surfaces d'impression (Q).

6. Système de gestion de produits selon l'une quelconque des revendications 1 à 5, comprenant en outre une unité de tri (60) qui évacue le produit qui est le produit non conforme sur la base du résultat d'inspection associé aux informations d'identification individuelles (I) que la première unité d'acquisition d'informations (41) a lues.

7. Système de gestion de produits selon l'une quelconque des revendications 1 à 6, comprenant en outre
une unité de rétention de produit non conforme (70) qui retient le produit non conforme,
une seconde unité d'acquisition d'informations (42) qui lit les informations d'identification individuelles (I) du produit qui sont transmises à l'unité de rétention de produit non conforme (70), et
une unité de vérification de produit non conforme (52) qui interroge l'unité de stockage (51) pour connaître le résultat d'inspection associé aux informations d'identification individuelles (I) que la seconde unité d'acquisition d'informations (42) a lues et vérifie que le produit qui est transporté vers l'unité de rétention de produit non conforme (70) est le produit non conforme.

8. Système de gestion de produits selon l'une quelconque des revendications 1 à 7, comprenant en outre
une unité d'emballage de boîtes (80) qui emballe le produit conforme dans une boîte d'emballage,
une troisième unité d'acquisition d'informations (53) qui lit les informations d'identification individuelles (I) du produit qui est transporté vers l'unité d'emballage de boîtes (80), et
une unité de vérification de produit conforme (53) qui interroge l'unité de stockage (51) pour connaître le résultat d'inspection associé aux informations d'identification individuelles (I) que la troisième unité d'acquisition d'informations (53) a lues et vérifie que le produit qui est transporté vers l'unité d'emballage de boîtes (80) est le produit conforme.

9. Dispositif de traitement de produit comprenant :
une unité d'impression (1023) qui imprime des informations sur une surface d'impression (Q) d'un produit (P) ; et
une unité de traitement qui traite le produit (P),
dans lequel la surface d'impression (Q) est une surface extérieure du produit, un emballage du produit ou une étiquette du produit, et
l'unité d'impression (1023) imprime, sur la surface d'impression, plusieurs éléments d'informations d'identification individuelles (I) qui sont identiques ;
dans lequel l'unité d'impression (1023) imprime plusieurs morceaux des mêmes informations d'identification individuelles (I) sous la forme de filigranes numériques.

10. Dispositif de traitement de produit selon la revendication 9, dans lequel
la surface d'impression (Q) comporte au moins une première surface et une seconde surface sur un côté opposé de la première surface, et
l'unité d'impression (1023) imprime plusieurs morceaux de la même information d'identification individuelle (I) sur chacune des première et seconde surfaces.

11. Dispositif de traitement de produit selon l'une quelconque des revendications 9 à 10, dans lequel l'unité de traitement comprend au moins l'un des éléments suivants :
une unité d'emballage qui emballe le produit (P) et
une unité d'inspection qui vérifie si le produit est un produit conforme.

12. Film d'emballage qui est placé dans une machine de fabrication et d'emballage de sacs et sur lequel un motif correspondant à un sac est imprimé de manière itérative, le motif comprenant plusieurs éléments d'informations d'identification individuelles uniques (I) qui sont identiques et les informations d'identification individuelles (I) étant imprimées sous la forme de filigranes numériques.

13. Film d'emballage selon la revendication 12, dans lequel
le sac comprend une première surface et une seconde surface sur un côté opposé de la première surface,
le motif a une première zone correspondant à la première surface et une seconde zone correspondant à la seconde surface, et
la première zone et la seconde zone comprennent chacune plusieurs éléments de la même information d'identification individuelle (I).
